# FASCICULE DE BREVET EUROPEEN

(11) **EP 3 008 905 B1**
(45) Date de publication et mention de la délivrance du brevet: **14.11.2018**
(21) Numéro de dépôt: 14728231.3
(22) Date de dépôt: 06.06.2014
(51) Int. Cl.: H04N 21/222, H04N 21/258, H04N 21/6543, H04N 21/8358

(54) **PROCEDE D'IDENTIFICATION DE TERMINAL DANS UN SYSTEME DE FOURNITURE DE CONTENUS MULTIMEDIA**
VERFAHREN ZUR IDENTIFIZIERUNG VON ENDGERÄTEN IN EINEM SYSTEM ZUR BEREITSTELLUNG VON MULTIMEDIA-INHALT
TERMINAL IDENTIFICATION METHOD IN A SYSTEM FOR PROVIDING MULTIMEDIA CONTENT

(30) Priorité: 10.06.2013 FR 1355324
(43) Date de publication de la demande: 20.04.2016
(73) Titulaire: Viaccess, 92057 Paris La Défense Cedex (FR)
(72) Inventeur: HAMON, Vincent, F-35000 Rennes (FR)
(74) Mandataire: Colombo, Michel
(86) Numéro de dépôt international: PCT/EP2014/061918
(87) Numéro de publication internationale: WO 2014/198676

(56) Documents cités:
- US-A1- 2001 054 150
- US-A1- 2004 111 740
- US-A1- 2012 173 342

## Description

L'invention concerne un procédé d'identification de terminal dans un système de fourniture de contenus multimédias. L'invention concerne également un procédé de génération, par un terminal, d'un flux multimédia modifié pour la mise en oeuvre de ce procédé. L'invention concerne également un procédé de détermination d'identifiant de terminal, par un dispositif d'identification de terminaux, pour la mise en oeuvre de ce procédé d'identification. L'invention concerne enfin un terminal, un dispositif d'identification de terminaux, et un support d'enregistrement d'informations, pour la mise en oeuvre de ce procédé d'identification.

Le système de fourniture de contenus multimédias considéré, est tout système support de tout service de fourniture en ligne de contenus multimédias à une pluralité de terminaux.

L'identifiant considéré d'un tel terminal est un identifiant accessible par ce terminal. Cet identifiant, lui est propre, ou, propre à toute autre entité tel que l'utilisateur titulaire du terminal.

Les contenus multimédias fournis sont des contenus audiovisuels, par exemple des programmes de télévision, des contenus audio seulement, par exemple un programme radiophonique, ou plus généralement tout contenu numérique contenant de la vidéo et/ou de l'audio tel qu'une application informatique, un jeu, un diaporama, une image ou tout ensemble de données.

Parmi ces contenus, on considérera plus particulièrement dans la suite des contenus dits temporels. Un contenu multimédia temporel est un contenu multimédia dont le jeu est une succession dans le temps de sons, dans le cas d'un contenu temporel sonore, ou d'images, dans le cas d'un contenu temporel vidéo, ou de sons et d'images temporellement synchronisés entre eux dans le cas d'un contenu multimédia temporel audiovisuel. Un contenu multimédia temporel peut également comporter des composants temporels interactifs synchronisés avec les sons ou les images.

Un tel contenu multimédia temporel, notamment lorsqu'il est l'objet de droits tels que des droits d'auteur ou des droits voisins, est typiquement fourni embrouillé au titre de sa protection par un système d'accès conditionnel, ou CAS, pour Conditional Access System.

La terminologie du domaine des systèmes d'accès conditionnel est ainsi utilisée dans la suite de ce document. Le lecteur intéressé pourra par exemple en trouver une présentation plus complète dans le document : « Functional Model of a Conditional Access System », EBU Review, Technical European Broadcasting Union, Bruxels, BE, N° 266, le 21 décembre 1995.

En particulier, les termes d'embrouillage et de désembrouillage sont donc utilisés pour le contenu multimédia protégé par un CAS, comme synonymes des termes de chiffrement et de déchiffrement, qui restent utilisés pour les autres données, comme notamment les mots de contrôle et clés.

Un contenu multimédia temporel est acquis par le terminal en réception à la volée alors qu'il est transmis par l'opérateur du service.

Le contenu multimédia temporel est ensuite désembrouillé, s'il était embrouillé, puis décodé par le terminal, pour générer un flux multimédia en clair comportant au moins une succession temporelle d'intervalles de temps cadencés à une fréquence prédéfinie, l'ensemble des bits d'information nécessaires pour afficher une seule image complète ou jouer un son sur un appareil multimédia étant transmis pendant un seul intervalle de temps, et chaque intervalle de temps correspondant à une seule image ou à un seul son, ce flux multimédia étant apte à être joué par un appareil multimédia raccordé à ce terminal. On désigne dans la suite par le terme consacré d'échantillon audio, ou « sample » en anglais, l'ensemble des bits d'information nécessaires pour jouer un son sur un appareil multimédia. Ici, par « en clair », on désigne le fait que le flux multimédia n'a plus besoin d'être désembrouillé pour être joué, par un appareil multimédia, de façon directement perceptible et intelligible par un être humain. Par « appareil multimédia », on désigne en outre tout dispositif apte à jouer le flux multimédia en clair, tel par exemple qu'un téléviseur.

Les procédés d'identification de terminal sont particulièrement utiles pour identifier le ou les terminaux utilisés pour redistribuer, au mépris des droits dont ils sont l'objet, donc illégalement, des contenus multimédias en clair. Ces terminaux, par la suite appelés terminaux « pirates », sont à cet effet utilisés dans un système de redistribution de contenus. Ces terminaux pirates sont en tout point identiques aux autres terminaux utilisés dans le système de fourniture de contenus multimédias et en différent seulement par l'usage qui en est fait.

Une telle redistribution illégale, appliquée à un contenu audiovisuel, met typiquement en oeuvre :
- un terminal pirate qui a recours à un service de fourniture de contenus multimédias pour acquérir et décoder les contenus multimédias fournis,
- un appareil multimédia raccordé à ce terminal pour jouer le contenu multimédia en clair, par exemple un téléviseur,
- un système de redistribution de contenus multimédias comportant :
   - une caméra pour filmer le contenu multimédia tel que joué, et générer un flux multimédia en clair redistribuable, et
   - un serveur de redistribution qui acquiert le flux multimédia filmé par la caméra et le transmet via un réseau à une pluralité de terminaux.

Ensuite, des utilisateurs recourent à ce système de redistribution pour recevoir, au moyen d'un terminal, le flux multimédia en clair transmis par ce système. Ce système de redistribution permet donc à une multitude d'utilisateurs de recevoir le flux multimédia en clair du terminal pirate et non de l'opérateur habilité du service de fourniture de contenus.

Dans un tel contexte, il est particulièrement intéressant d'identifier le terminal pirate utilisé pour pouvoir mettre en place des contre-mesures. Cela permet aussi de tracer le titulaire du terminal pirate et du serveur de redistribution, ou pirate, pour mettre en oeuvre des actions d'ordre commercial ou judiciaire, par exemple, à son égard.

A cet effet, des procédés d'identification du terminal pirate sont connus. Dans ces procédés connus :
a) le terminal pirate acquiert puis décode un contenu multimédia temporel pour générer un flux multimédia en clair, et
b) un dispositif d'identification de terminaux transmet un ordre d'identification à ce terminal pirate.

En réponse à l'ordre d'identification, le terminal pirate transmet à l'appareil multimédia, en plus du flux multimédia en clair, un flux multimédia supplémentaire dans lequel est codé son identifiant. En réponse à la réception de ce flux multimédia supplémentaire, l'appareil multimédia affiche en surimpression, sur les images du flux multimédia en clair, l'identifiant du terminal pirate. Les images filmées par la caméra, puis transmises au système de redistribution, comportent alors l'identifiant du terminal pirate.

En parallèle, le dispositif d'identification se connecte au système de redistribution de manière à acquérir le flux multimédia redistribué par ce système. Ensuite, le dispositif d'identification acquiert ce flux multimédia redistribué et l'analyse pour en extraire l'identifiant du terminal pirate. Ces procédés connus sont dits d'empreinte, ou « fingerprinting », en anglais.

Ces procédés d'empreinte permettent ainsi d'identifier le terminal pirate utilisé. On dit qu'ils permettent de tracer le pirate.

Leur premier inconvénient est que ces procédés d'empreinte reposent sur l'ajout d'un flux d'informations supplémentaire au flux multimédia en clair. Cela présente, en termes de détectabilité par le pirate et de robustesse, l'inconvénient qu'il est relativement aisé pour le pirate de les rendre inopérants. Il peut, en effet, détecter le flux d'informations supplémentaire adjoint au flux multimédia en clair, par analyse automatique du flux multimédia à redistribuer, typiquement au moyen d'une sonde placée en sortie du composeur du terminal. L'ayant détecté, il peut ensuite le supprimer de façon à rétablir le flux multimédia en clair. Dès lors le flux multimédia redistribué ne comporte plus aucun moyen permettant d'identifier le terminal pirate.

L'identifiant étant clairement visible sur l'appareil multimédia jouant le flux multimédia redistribué, le pirate peut donc en outre détecter le flux d'informations supplémentaire à l'oeil nu, c'est-à-dire plus facilement qu'au moyen de l'analyse automatique mentionnée plus haut. Il peut ensuite facilement rendre inopérant le procédé d'empreinte, en cachant l'identifiant lorsqu'il est affiché sur l'écran filmé par la caméra, ou en interrompant alors la redistribution du flux multimédia. Les procédés d'empreinte présentent donc ainsi, en termes de détectabilité par le pirate et de robustesse, un inconvénient supplémentaire.

A cause de la visibilité de l'identifiant sur l'appareil multimédia jouant le flux multimédia en clair, a priori inconfortable pour les utilisateurs légitimes du contenu multimédia, les procédés d'empreinte présentent en outre un second inconvénient en termes d'impact sur l'expérience de ces utilisateurs.

Pour remédier à ces inconvénients des procédés d'empreinte, d'autres procédés, dits de filigrane, ou « watermarking », en anglais, ont été proposés. Ils consistent à ajouter le plus discrètement possible, c'est-à-dire de façon peu ou pas détectable par l'oeil humain, l'identifiant au flux multimédia en clair. Cet ajout peut par exemple être réalisé par petites parties distribuées dans les images dont la succession dans le temps constitue le jeu du contenu multimédia temporel. Dans ces procédés de filigrane, un appareil multimédia destinataire du flux multimédia ainsi modifié joue le flux multimédia en clair et, simultanément, affiche l'identifiant par parties. Il affiche donc typiquement de façon superposée les composantes vidéo du flux multimédia en clair et une partie variable de l'identifiant, de sorte que l'identifiant soit peu visible ou invisible à l'oeil humain sur l'appareil multimédia.

Ces procédés de filigrane complexifient la détection du flux d'informations supplémentaire par analyse automatique du flux multimédia à redistribuer. Ils atténuent donc l'inconvénient des procédés d'empreinte en termes de détectabilité par le pirate. Ils n'éliminent cependant pas ce premier inconvénient, et restent donc susceptibles d'être rendus inopérants de la même façon. Ces améliorations se font en outre au prix d'un nouvel inconvénient en termes de complexité de la solution, à la fois quant à l'insertion et quant à l'extraction de l'identifiant dans le flux multimédia.

De l'état de la technique est également connu des documents US 2001/054150 A1, US 2012/173342 A1, et US 2004/111740 A1.

L'invention vise à remédier au premier inconvénient exposé plus haut, commun à l'ensemble des procédés connus, en termes de détectabilité par le pirate et de robustesse, au moyen d'une solution simple à développer et à mettre en oeuvre.

L'invention a ainsi pour objet un procédé d'identification de terminal dans un système de fourniture de contenus multimédia conforme à la revendication 1.

Dans un tel procédé le dispositif d'identification détermine, à l'étape d), l'identifiant du terminal indépendamment de la teneur de la modification prédéterminée. Cette teneur n'apporte donc pas d'information au procédé, de sorte que la modification prédéterminée ne réalise donc, relativement au flux multimédia originel, qu'une destruction d'information. En effet, les valeurs originelles des bits d'information modifiés ne figurent pas dans le flux multimédia modifié, et ne peuvent pas y être restaurées. Le flux multimédia originel ne peut donc pas être restauré par suppression du flux d'informations supplémentaire, ce qui résout le premier inconvénient exposé plus haut en termes de détectabilité par le pirate et de robustesse, et rend ce procédé beaucoup plus robuste que les procédés connus.

Du fait de cette même caractéristique, un tel procédé présente l'avantage supplémentaire d'être applicable à une composante audio du contenu multimédia temporel.

Les modes de réalisation de ce procédé d'identification de terminal peuvent comporter une ou plusieurs des caractéristiques des revendications dépendantes de procédé d'identification de terminal.

Ces modes de réalisation de ce procédé d'identification de terminal présentent en outre l'avantage suivant :
- le conditionnement, à la vérification d'une précondition construite de manière à être vérifiée uniquement par une partie des terminaux auxquels l'ordre d'identification est transmis, du déclenchement de la modification prédéterminée, permet de limiter le parc des terminaux susceptibles de déclencher cette modification, donc de limiter le second inconvénient exposé plus haut, en termes d'impact sur l'expérience des utilisateurs légitimes du contenu multimédia temporel.

L'invention a également pour objet un procédé de génération, par un terminal, d'un flux multimédia modifié conforme à la revendication 5.

Les modes de réalisation de ce procédé de génération peuvent comporter une ou plusieurs des caractéristiques des revendications dépendantes de procédé de génération, par un terminal, d'un flux multimédia modifié.

Ces modes de réalisation du procédé de génération, par un terminal, d'un flux multimédia modifié présentent en outre les avantages suivants :
- le déclenchement de la modification prédéterminée après avoir laissé s'écouler une durée égale à une durée calculée en fonction de l'identifiant du terminal, permet de communiquer au dispositif d'identification une information supplémentaire concernant l'identifiant du terminal, donc de réduire le nombre d'ordres d'identification nécessaires à l'identification du terminal, et donc de limiter le second inconvénient exposés plus haut, en termes d'impact sur l'expérience des utilisateurs légitimes du contenu multimédia temporel ;
   - la limitation de la durée calculée ci-dessus en fonction d'un paramètre de borne si cette durée calculée dépasse une durée déterminée en fonction de ce paramètre de borne, permet de limiter le temps total nécessaire à l'identification du terminal ;
- le déclenchement de la modification prédéterminée d'au moins une partie des bits d'informations nécessaires pour jouer un son ou afficher une image complète contenu dans le flux multimédia, répétée de sorte que la durée de jeu des sons ou images complètes ainsi modifiées soit égale à une durée de jeu calculée par le terminal en fonction de son identifiant, permet également de communiquer au dispositif d'identification une information supplémentaire concernant l'identifiant du terminal, donc de réduire le nombre d'ordres d'identification nécessaires à l'identification du terminal, et donc de limiter le second inconvénient exposé plus haut, en termes d'impact sur l'expérience des utilisateurs légitimes du contenu multimédia temporel.

L'invention a également pour objet un procédé de détermination d'identifiant de terminal, conforme à la revendication 10.

L'invention a également pour objet un support d'enregistrement d'informations comportant des instructions pour l'exécution de l'un des deux procédés ci-dessus, lorsque ces instructions sont exécutées par un calculateur électronique.

L'invention a également pour objet un terminal conforme à la revendication 11.

L'invention a enfin pour objet un dispositif d'identification de terminaux conforme à la revendication 13.

L'invention sera mieux comprise à la lecture de la description qui va suivre, donnée uniquement à titre d'exemple non limitatif, et faite en référence aux dessins sur lesquels :
- la figure 1 est une représentation schématique de l'architecture d'un système de fourniture de contenus multimédia,
- la figure 2 est une représentation schématique de la structure d'un message de contrôle des titres d'accès, ou message ECM, pour Entitlement Control Message, en anglais, utilisé pour transmettre un ordre d'identification,
- la figure 3 est une représentation schématique d'un procédé d'identification de terminal dans un système de fourniture de contenus multimédias.

Dans ces figures, les mêmes références sont données pour désigner les mêmes éléments.

Dans la suite de cette description, les caractéristiques bien connues de l'homme du métier ne sont pas décrites en détail.

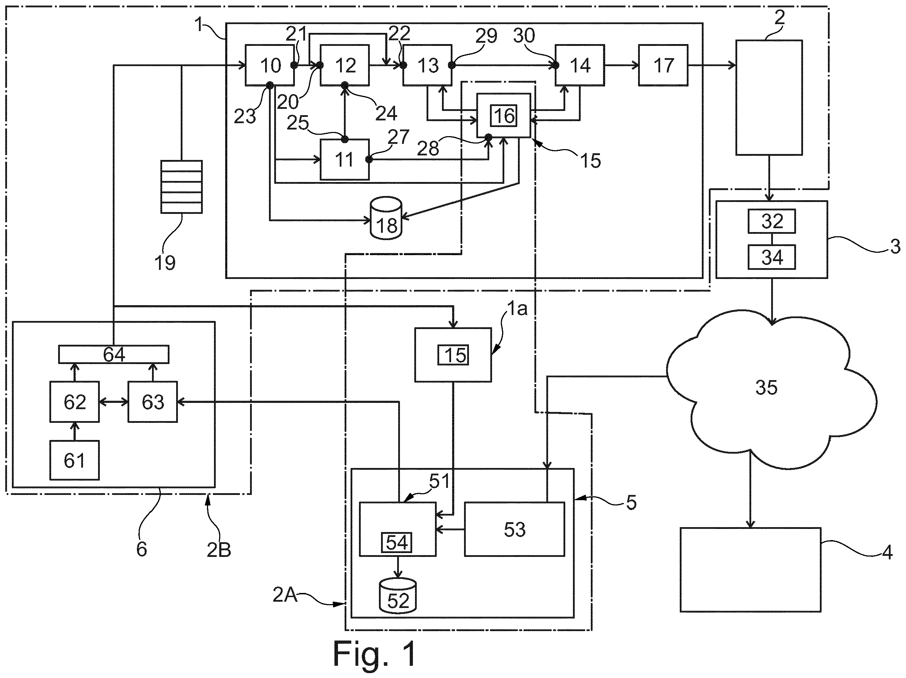

La figure 1 représente un système 2A pour la mise en oeuvre d'un procédé d'identification de terminal dans un système 2B de fourniture de contenus multimédias. Outre ces derniers, la figure 1 fait apparaître un système 3 de redistribution de contenus multimédias.

Le système 2B comporte une tête 6 de réseau, et une pluralité, typiquement des milliers, de terminaux 1, à chacun desquels est raccordé au moins un appareil multimédia 2. Pour simplifier l'illustration, seul un terminal 1, auquel n'est raccordé qu'un appareil multimédia 2, est représenté sur la figure 1.

Par exemple l'appareil multimédia 2 est un téléviseur, et la liaison entre le terminal 1 et l'appareil multimédia 2 est au format HDMI, pour High Définition Multimedia Interface.

La tête 6 de réseau est apte à émettre un contenu multimédia embrouillé à destination de tous les terminaux 1. Elle comporte à cet effet un codeur 61, un embrouilleur 62, un module 63 de conditionnement d'accès et un multiplexeur 64.

L'embrouilleur 62, dont l'entrée est raccordée à la sortie du codeur 61, comporte une première sortie et une deuxième sortie.

Le module 63 de conditionnement d'accès a des première et deuxième entrées respectivement raccordées à la deuxième sortie de l'embrouilleur 62 et à une sortie d'un dispositif 5 d'identification de terminaux.

Le multiplexeur 64, a des première et deuxième entrées respectivement raccordées à la première sortie de l'embrouilleur 62 et à la sortie du module 63 de conditionnement d'accès.

Le système 2B comporte ici un lecteur 19 associé au terminal 1. Le lecteur 19 est tout lecteur de support mécanique de contenu multimédia temporel, tel par exemple qu'un lecteur de disque numérique audio ou vidéo.

Le terminal 1 est apte à acquérir un contenu multimédia temporel, soit en réception à la volée alors qu'il est émis par la tête 6 de réseau ou le lecteur 19, soit par lecture dans un support d'enregistrement 18 dans lequel il a préalablement été enregistré. Dans ce mode de réalisation particulier, le terminal 1 comporte le support d'enregistrement 18. Le contenu multimédia temporel acquis peut être embrouillé ou non.

Le terminal 1 est également apte à décoder le contenu multimédia temporel acquis pour générer un flux multimédia en clair. Ce flux multimédia est joué par l'appareil multimédia 2 raccordé à ce terminal.

Le terminal 1 comporte à cet effet un module 10 d'acquisition, un module 11 d'accès conditionnel, un désembrouilleur 12, un décodeur 13, un composeur 14, et un contrôleur 17.

Le terminal 1 est enfin apte à déclencher, en fonction d'un identifiant du terminal ou d'un groupe de terminaux auxquels il appartient, une modification prédéterminée d'au moins une partie des bits d'information nécessaires pour jouer un son ou afficher une image complète contenu dans le flux multimédia de manière à obtenir un flux multimédia modifié. Il comporte enfin aussi à cet effet un module 15 de modification de flux multimédias.

Le module 10 d'acquisition comporte des sorties 21 et 23.

Le module 11 d'accès conditionnel, dont l'entrée est raccordée à la sortie 23, comporte des sorties 25 et 27.

Le désembrouilleur 12, a ses entrées 20 et 24 respectivement raccordées aux sorties 21 du module 10 d'acquisition et 25 du module 11 d'accès conditionnel.

Le décodeur 13, a une entrée 22 raccordée à la sortie du désembrouilleur 12.

Le composeur 14 a une entrée 30 raccordée à une sortie 29 du décodeur 13.

Le module 15 de modification de flux multimédias a une entrée 28 raccordée à la sortie 27 du module 11 d'accès conditionnel. Il est ici activable à la fois par le décodeur 13 et le composeur 14, auxquels il est donc également relié.

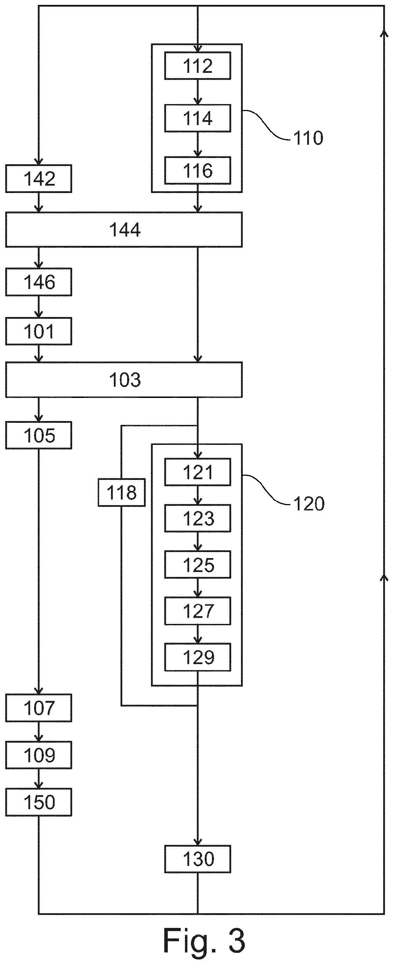

Le module 15 est équipé d'un calculateur électronique 16 programmable apte à exécuter des instructions enregistrées sur un support d'enregistrement d'informations. A cet effet, le calculateur 16 est raccordé à la mémoire 18. Cette mémoire 18 comporte des instructions nécessaires pour mettre en oeuvre le procédé de la figure 3. Ces instructions comportent notamment celles d'un algorithme de modification de flux multimédias.

Le contrôleur 17 a son entrée raccordée à une sortie du composeur 14. Par exemple, si la liaison entre le terminal 1 et l'appareil multimédia 2 est au format HDMI, le contrôleur 17 est dit contrôleur HDMI.

Le système 3 de redistribution de contenus multimédias est apte à capturer le flux multimédia en clair tel que joué par l'appareil multimédia 2, pour générer un flux multimédia en clair redistribuable, et à transmettre ce dernier, via un réseau 35, à une pluralité de terminaux 4. Le système 3 comporte à cet effet une caméra 32 et un serveur 34 de redistribution. Le serveur 34 de redistribution, a son entrée raccordée à la sortie de la caméra 32, et sa sortie, via un réseau 35, à la pluralité de terminaux 4.

Le réseau 35 est un réseau grande distance de distribution d'informations tel que la toile d'araignée mondiale plus connue sous le terme de réseau « Internet ».

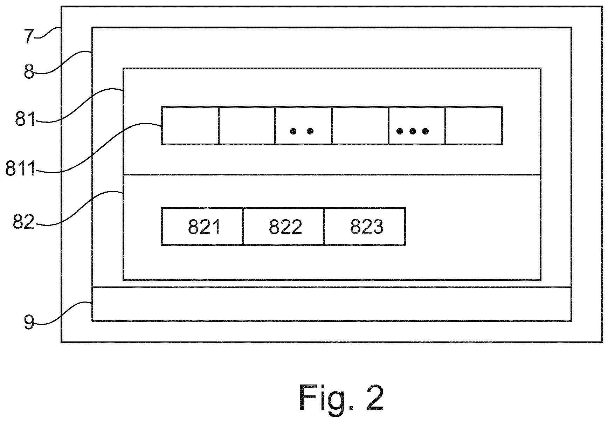

Le système 2A comporte le dispositif 5 d'identification de terminaux. Ce dispositif 5 est apte :
- à construire un ordre 8 d'identification (Figure 2) et à le transmettre aux terminaux 1,
- à acquérir un flux multimédia redistribué, via le réseau 35, auprès du système 3 de redistribution de contenus multimédias, et à déterminer l'identifiant du terminal 1 ou d'un groupe de terminaux auquel le terminal 1 appartient, à partir de l'ordre 8 d'identification transmis et de la présence ou de l'absence, en réponse, d'une modification prédéterminée dans le flux multimédia acquis.

A cet effet, le dispositif 5 comporte un module 53 d'acquisition de flux multimédias redistribués, un module 51 d'identification de terminaux et un support d'enregistrement d'informations 52.

Le module 53 a son entrée connectée au réseau 35.

Le module 51 a son entrée raccordée à une sortie du module 53.

Le module 51 est équipé d'un calculateur électronique 54 programmable apte à exécuter des instructions enregistrées sur un support d'enregistrement d'informations. A cet effet, le calculateur 54 est raccordé à la mémoire 52. Cette mémoire 52 comporte des instructions nécessaires pour mettre en oeuvre le procédé de la figure 3. Ces instructions comportent notamment celles d'un algorithme d'identification de terminaux.

Ici, le système 2A comporte également un synchroniseur 1a, connecté au système 2B de fourniture de contenus. Le rôle du synchroniseur 1a est de permettre au dispositif 5 de déterminer l'instant auquel les terminaux 1 ont reçu un ordre d'identification donné. A cet effet, le synchroniseur 1a est apte à recevoir l'ordre d'identification transmis par la tête 6 et à transmettre au dispositif 5 sa date de réception. Par exemple, le synchroniseur 1a est identique au terminal 1 sauf que son module 15 de modification de flux multimédias a une sortie raccordée à une entrée du module 51.

La figure 2 représente un message ECM 7 utilisé, dans un mode de réalisation préféré, pour transmettre un ordre d'identification.

L'ECM 7 a la structure 9 d'ECM bien connue de l'homme du métier des systèmes d'accès conditionnel, et encapsule en outre l'ordre 8 d'identification.

La structure 9 d'ECM encapsule notamment les conditions d'accès au contenu auquel l'ECM 7 est associé, et le mot de contrôle, ou clé, qui a été utilisé pour embrouiller ce contenu.

L'ordre 8 d'identification comporte une précondition 81 et une liste 82 de paramètres.

La précondition 81 teste la présence ou la valeur d'au moins une donnée préenregistrée dans un terminal. Elle est construite de manière à être vérifiée uniquement par une partie des terminaux auxquels l'ordre d'identification est transmis. Typiquement, chaque donnée testée est choisie dans le groupe composé de : un identifiant du terminal, un identifiant d'événement, un identifiant de titre d'accès, un temps de fonctionnement, un identifiant de période de fonctionnement. Toutefois, d'autres données permettant de discriminer les terminaux pirates et les terminaux légitimement utilisés, peuvent également être considérées.

La précondition 81 est ici une combinaison logique 811 de critères, chacun d'un type choisi dans un ensemble composé des types suivants :
- un critère d'index, comportant un paramètre de valeur, vrai si le bit de l'identifiant du terminal, d'index donné par le paramètre de valeur, a une valeur prédéterminée,
- un critère d'identifiant, comportant un paramètre de valeur et un paramètre de masque, vrai si les bits de l'identifiant du terminal sélectionnés ou masqués par le paramètre de masque, ont les mêmes valeurs que ceux du paramètre de valeur,
- un critère d'identifiant, comportant un paramètre de masque et un paramètre d'effectif, vrai si le nombre des bits de l'identifiant du terminal sélectionnés ou masqués par le paramètre de masque qui ont une valeur prédéterminée, est égal au paramètre d'effectif,
- un critère d'événement, comportant une liste d'identifiants d'événements, vrai si chacun des identifiants d'événements de la liste est mémorisé dans le terminal,
- un critère d'événement, comportant une liste d'identifiants d'événements, vrai si chacun des identifiants d'événements de la liste n'est pas mémorisé dans le terminal,
- un critère de titres d'accès, comportant une liste d'identifiants de titres d'accès, vrai si chacun des identifiants de titres d'accès de la liste est mémorisé dans le terminal,
- un critère de titres d'accès, comportant une liste d'identifiants de titres d'accès, vrai si chacun des identifiants de titres d'accès de la liste n'est pas mémorisé dans le terminal,
- un critère de temps de fonctionnement, comportant un paramètre de durée, vrai si le terminal est en fonctionnement depuis une durée supérieure à celle exprimée par son paramètre de durée,
- un critère de temps de fonctionnement, comportant un paramètre de durée, vrai si le terminal est en fonctionnement depuis une durée inférieure à celle exprimée par son paramètre de durée,
- un critère de période de fonctionnement, comportant une liste d'associations d'intervalles de temps à un canal, vrai si pour chacune des associations, le terminal a été en fonctionnement sur ce canal, au cours de chacun de ces intervalles de temps,
- un critère de période de fonctionnement, comportant une liste d'associations d'intervalles de temps à un canal, vrai si pour chacune des associations, le terminal n'a pas été en fonctionnement sur ce canal, au cours de chacun de ces intervalles de temps.

Un événement est un phénomène identifiable par le terminal et qui, lorsqu'il se produit, déclenche l'enregistrement par le terminal d'un identifiant de cet événement. A l'inverse, tant que cet événement ne se produit pas, aucun identifiant de cet événement n'est enregistré par le terminal. L'identifiant d'événement permet de distinguer cet événement parmi l'ensemble des autres événements identifiables par le terminal.

Des exemples de préconditions 81 vont maintenant être donnés. Dans ces exemples, les notations suivantes sont utilisées :
- UA est la valeur de l'identifiant du terminal 1,
- VALUE est la valeur du paramètre de valeur,
- MASK est la valeur du paramètre de masque,
- HASONE est la valeur du paramètre d'effectif,
- EVENT désigne un critère d'événements,
- ENT désigne un critère de titres d'accès,
- AWAKE désigne un critère de durée de fonctionnement,
- OPER désigne un critère de période de fonctionnement

Dans ces exemples, les valeurs numériques sont données en hexadécimal et uniquement à titre d'exemple.

Exemple 1 : dans cette précondition, VALUE désigne la position, ici l'index, du bit de l'identifiant du terminal 1 dont la valeur doit être testée. Par exemple, si VALUE = 0x02, la précondition est satisfaite si le deuxième bit de UA est égal à un. Sinon la précondition n'est pas vérifiée. Cette précondition est constituée d'un unique critère d'index.

Exemple 2 : dans cette précondition, VALUE est une valeur prédéterminée comprise entre 0x00 et 0xFF et MASK est une valeur utilisée pour sélectionner ou masquer un ou plusieurs bits des valeurs VALUE et UA. La précondition est satisfaite uniquement si les bits sélectionnés dans VALUE et UA sont identiques. Par exemple, si VALUE = 0xF1 et MASK = 0x03, alors la précondition n'est satisfaite que si les deux derniers bits (car MASK = 0x03) de UA ont les mêmes valeurs que les deux derniers bits de VALUE, c'est-à-dire 0 et 1. La précondition de cet exemple est constituée d'un unique critère d'identifiant, lui-même constitué d'un paramètre de valeur et d'un paramètre de masque.

Exemple 3 : dans cette précondition, MASK est une valeur utilisée pour sélectionner ou masquer un ou plusieurs bits de la valeur UA, et HASONE est une valeur entière inférieure à 16, en décimal. La précondition est satisfaite seulement si l'effectif des bits sélectionnés dans UA qui ont la valeur 1, est égal à HASONE. La précondition de cet exemple est constituée d'un unique critère d'identifiant, lui-même constitué d'un paramètre de masque et d'un paramètre d'effectif.

Exemple 4 : dans cette précondition, 0 et 1 sont les identifiants d'événements qui ont pu être préalablement inscrits dans un terminal. La précondition constituée du seul critère d'événement EVENT (0, 1) est satisfaite uniquement si chacun des deux événements 0 et 1 est inscrit dans le terminal 1. Le critère EVENT prend pour argument une liste d'identifiants d'événements d'effectif quelconque.

Exemple 5 : dans la même situation que ci-dessus, la précondition constituée du seul critère d'événement -EVENT (0, 1) est satisfaite seulement si aucun des événements 0 et 1 n'est inscrit dans le terminal 1.

Exemple 6 : dans cette précondition, PPV1 et PPV2 sont les identifiants de titres d'accès qui ont pu être préalablement inscrits dans un terminal, par exemple suite à l'acquisition, auprès du système 2B, de séances à la demande S1 et S2. La précondition constituée du seul critère de titres d'accès ENT (PPV1, PPV2) est satisfaite seulement si chacun des titres d'accès PPV1 et PPV2 est inscrit dans le terminal 1. Le critère ENT prend pour argument une liste, d'effectif quelconque, d'identifiants de titres d'accès.

Exemple 7 : dans la même situation que ci-dessus, la précondition constituée du seul critère de titres d'accès -ENT (PPV1, PPV2) est satisfaite seulement si aucun des titres d'accès PPV1 et PPV2 n'est inscrit dans le terminal 1.

Exemple 8 : dans cette précondition, d est la valeur en heures d'un paramètre de durée ; par exemple d=24. La précondition constituée du seul critère de durée de fonctionnement AWAKE(d) est satisfaite seulement si le terminal 1 est actif depuis au moins 24 heures.

Exemple 9 : dans la même situation, la précondition constituée du seul critère de durée de fonctionnement -AWAKE(d) est satisfaite seulement si le terminal 1 est actif depuis moins de 24 heures.

Exemple 10 : dans cette précondition, d1, d2, d3 et d4 sont des dates, et CHAN1 et CHAN2 les identifiants de canaux supports des services de contenus supportés par le système 2B de fourniture de contenus. La précondition constituée du seul critère de période de fonctionnement OPER ((CHAN1, (d1, d2)), (CHAN2, (d3, d4))) est satisfaite seulement si le terminal 1 a été utilisé en réception du canal CHAN1 entre les dates d1 et d2, et en réception du canal CHAN2 entre les dates d3 et d4. Le critère OPER prend en argument une liste, d'effectif quelconque, d'associations entre un identifiant de canal et une période de fonctionnement décrite au moyen de deux dates.

La précondition 81 peut être constituée de toute combinaison logique de tels critères au moyen des opérateurs booléens « non », « ou » et « et ». Par exemple, la précondition 81 est la conjonction, ou la disjonction, de l'ensemble des critères qui la composent, vraie si chacun, ou l'un au moins, respectivement, de ces critères est vrai.

La liste 82 de paramètres comporte un paramètre 821 de retard, un paramètre 822 de borne, et un paramètre 823 d'identifiant de groupe de bits. Le paramètre 821 de retard exprime une durée, le paramètre 822 de borne exprime une limite de durée, et le paramètre 823 d'identifiant de groupe de bits permet de désigner un groupe de bits de l'identifiant d'un terminal. Ce groupe de bits est par exemple le groupe de bits, éventuellement de longueur donnée, d'un identifiant d'un terminal, commençant à son bit d'index donné.

Par exemple, les paramètres 821 de retard, et 822 de borne, sont des entiers R et B, respectivement, exprimant deux durées en secondes ; le paramètre 823 d'identifiant de groupe de bits est un couple d'entiers (i, L), désignant respectivement l'indice i, dans l'identifiant du terminal, du premier bit du groupe de bits considéré, et sa longueur L, c'est-à-dire son effectif.

Le fonctionnement des systèmes 2A, 2B et 3 va maintenant être décrit en référence au procédé de la figure 3.

Avant le système 2A d'identification de terminaux, le système 2B de fourniture de contenus multimédias et le système 3 de redistribution de contenus multimédias sont mis en oeuvre de façon bien connue de l'homme du métier.

Au titre de la mise en oeuvre du système 2B, lors d'une étape 142, le codeur 61 reçoit d'abord un contenu multimédia temporel, le compresse pour générer un contenu multimédia compressé, et le transmet à l'embrouilleur 62. L'embrouilleur 62 embrouille ensuite, au moyen d'un mot de contrôle, le contenu multimédia compressé, pour générer un contenu multimédia embrouillé. L'embrouilleur 62 transmet enfin le mot de contrôle au module 63 de conditionnement d'accès, et le contenu multimédia embrouillé au multiplexeur 64.

Lors d'une étape 144, le module 63 encapsule alors le mot de contrôle dans un message ECM qu'il dote ainsi de la structure 9, et transmet ce message au multiplexeur 64.

Lors d'une étape 146, le multiplexeur 64 synchronise ensuite le contenu multimédia embrouillé et le message ECM, pour générer un contenu multimédia synchronisé. Le multiplexeur 64 transmet ensuite le contenu multimédia synchronisé à destination des terminaux 1.

Ensuite, un terminal 1 acquiert puis décode, lors d'étapes 101, 103, 105, 107 et 109, le contenu multimédia synchronisé.

Lors de l'étape 101, le module 10 acquiert le contenu multimédia synchronisé, en réception à la volée alors qu'il est transmis par la tête 6 de réseau, puis le démultiplexe pour en extraire le contenu multimédia embrouillé et le message ECM. Le module 10 d'acquisition transmet ensuite le contenu multimédia embrouillé au désembrouilleur 12 et le message ECM au module 11 d'accès conditionnel.

Lors de l'étape 103, le module 11 d'accès conditionnel extrait ensuite le mot de contrôle du message ECM, et le transmet au désembrouilleur 12.

Lors de l'étape 105, le désembrouilleur 12 désembrouille, à l'aide du mot de contrôle, le contenu multimédia embrouillé, de façon à restituer le contenu multimédia compressé en clair et à transmettre ce dernier au décodeur 13. Le décodeur 13 décompresse le contenu multimédia compressé en clair, de façon à restituer les composantes décompressées d'un flux multimédia, et transmet ces composantes au composeur 14. Dans le cas d'un contenu multimédia temporel, ces composantes comptent au moins une composante vidéo ou une composante audio.

Lors de l'étape 107, le composeur 14 combine les composantes du flux multimédia pour constituer le flux multimédia, puis le transmet au contrôleur 17.

Lors de l'étape 109, le contrôleur 17 conditionne le flux multimédia conformément au protocole requis par la liaison entre le terminal 1 et l'appareil multimédia 2, et le transmet, sur la sortie du terminal 1, vers l'appareil multimédia 2. Par exemple, si le contrôleur 17 est un contrôleur HDMI, ce protocole est TDMS, pour Transition Minimized Differential Signalling. L'appareil multimédia 2 joue enfin le flux multimédia en clair.

Au titre de la mise en oeuvre du système 3 de redistribution de contenus multimédias, lors d'une étape 150, la caméra 32 filme le flux multimédia en clair tel que joué par l'appareil multimédia 2 pour générer un flux multimédia en clair redistribuable, et transmet ce dernier au serveur 34 de redistribution. Lors de l'étape 150, le serveur de redistribution 34 transmet ensuite le flux multimédia en clair redistribuable, via le réseau 35, à la pluralité de terminaux 4.

Au titre de la mise en oeuvre du système 2A, lors d'une première étape 110, le dispositif 5 d'identification de terminaux transmet un ordre d'identification à tous les terminaux 1 et au synchroniseur 1a.

A cet effet, lors d'une opération 112, le module 51 d'identification de terminaux construit un ordre 8 d'identification comportant une liste 82 de paramètres.

Ici, en fonction de la stratégie d'identification de terminaux mise en oeuvre, le module 51 d'identification de terminaux fixe les valeurs R, B et (i, L) respectivement, des paramètres 821 de retard, 822 de borne, et 823 d'identifiant de groupe de bits. Typiquement, les deux premières sont fixées à l'initiative d'un utilisateur lors de la configuration du dispositif 5 d'identification de terminaux, ou de l'activation du procédé d'identification de terminaux. La valeur de l'identifiant de groupe l'est par le calculateur électronique 54, en fonction des précédentes itérations et des instructions qui implémentent cette stratégie, et qu'il exécute.

Puis, lors d'une opération 114, le module 51 d'identification de terminaux construit une précondition 81 et l'insère dans l'ordre 8 d'identification.

Ici, en fonction de la stratégie d'identification de terminaux mise en oeuvre, et des terminaux à cibler, le module 51 fixe en particulier la liste des critères, et leur combinaison logique, composant la précondition 81.

Ensuite, lors d'une opération 116, le module 51 transmet l'ordre 8 à la tête 6 de réseau.

Puis, lors des étapes 144 et 146 déjà décrites, la tête 6 de réseau transmet l'ordre 8, aux terminaux 1 et au synchroniseur 1a. En particulier, lors de l'étape 144, le module 63 de conditionnement d'accès encapsule l'ordre 8 dans le message ECM, le dotant ainsi de la structure 7, après l'avoir doté de la structure 9 en y encapsulant un mot de contrôle, et transmet ce message ECM 7 au multiplexeur 64.

Lors des étapes 101 et 103 déjà décrites, le terminal 1 et le synchroniseur 1a acquièrent ensuite l'ordre 8.

En particulier, lors de l'étape 103, en plus du mot de contrôle, le module 11 d'accès conditionnel extrait du message ECM 7 l'ordre 8, puis le transmet au module 15 de modification de flux multimédias.

En réponse, lors d'une étape 118, le module 15 du synchroniseur 1a transmet la date de réception de cet ordre 8, au module 51. La date de réception est par exemple exprimée avec une précision d'une seconde, ou supérieure.

En parallèle, en réponse à l'ordre 8, le module 15 de chaque terminal 1 procède à une étape 120. Lors de cette étape 120, le module 15 :
- évalue, lors d'une opération 121, la précondition 81 de l'ordre 8 d'identification,
- calcule puis limite, lors d'opérations 123 et 125, respectivement, un retard de déclenchement,
- calcule, lors d'une opération 127, une durée de jeu, et,
- lors d'une opération 129, déclenche ou réalise la modification prédéterminée d'au moins une partie des bits d'information nécessaires pour jouer un son ou afficher une image complète contenu dans le flux multimédia de manière à obtenir un flux multimédia modifié, puis
- transmet ce dernier au composeur 17.

A cet effet, lors de l'opération 121, le module 15 détermine si la précondition 81 est satisfaite par l'identifiant du terminal 1. Si ce test est positif, les opérations suivantes 123, 125, 127 et 129 de l'étape 120 sont mises en oeuvre par ce module 15 ; sinon, l'étape 120 est interrompue. Lorsque l'étape 120 est interrompue, le flux multimédia transmis à l'appareil 2 n'est pas modifié.

L'occurrence, ou non, de la modification prédéterminée dans le flux multimédia transmis par le composeur 17, donc dans le flux multimédia ultérieurement redistribué, indique donc la satisfaction, ou non, de la précondition 81 par l'identifiant du terminal 1.

Lors de l'opération 123, le module 15 calcule un retard de déclenchement. Par exemple, le retard de déclenchement est calculé comme étant le produit de la valeur R du paramètre 821 de retard, et d'une valeur du groupe de bits de UA identifié par le paramètre 823 d'identifiant de groupe de bits. Cette valeur est par exemple calculée comme la valeur en décimal du groupe de bits identifié. La valeur calculée du retard étant fonction de la valeur de l'identifiant, la mise en oeuvre de ce retard permet donc de transmettre au dispositif 5 cette information supplémentaire sur la valeur UA.

Lors de l'opération 125, le module 15 limite le retard de déclenchement précédemment calculé. A cet effet, si le retard de déclenchement calculé est supérieur à la valeur B du paramètre 822 de borne, le module 15 octroie cette valeur B au retard de déclenchement. Dans le cas contraire, la valeur du retard de déclenchement précédemment calculée est laissée inchangée.

Lors de l'opération 127, le module 15 calcule une durée de jeu, par exemple de la même façon qu'il calcule le retard de déclenchement lors de l'opération 123 déjà décrite. Lors de la même opération 127, le module 15 peut ensuite limiter la durée de jeu calculée, de façon analogue à ce qui a déjà été décrit pour le retard de déclenchement au titre de l'opération 125. Tout autre mode de calcul d'une durée de jeu peut cependant être mis en oeuvre. La durée de jeu calculée étant fonction de la valeur de l'identifiant, elle permet donc de transmettre au dispositif 5 une information sur la valeur UA.

Enfin, lors de l'opération 129, le module 15 déclenche ensuite une modification prédéterminée des bits d'information nécessaires pour jouer un son ou afficher une image complète contenu dans le flux multimédia de manière à obtenir un flux multimédia modifié. A cet effet, le module 15 laisse d'abord s'écouler, depuis l'instant de réception de l'ordre 8, une durée égale au retard de déclenchement calculé puis limité lors des opérations 123 et 125. Le module 15 réalise ensuite la modification prédéterminée. Le module 15 répète enfin la réalisation de cette modification sur des sons ou images complètes successifs du flux multimédia, de sorte que la durée de jeu de la séquence de sons ou images complètes ainsi modifiés soit égale à la durée de jeu calculée lors de l'opération 127.

La modification prédéterminée d'au moins une partie des bits d'information nécessaires pour jouer un son ou afficher une image complète contenu dans le flux multimédia, est indépendante de la valeur de l'identifiant du terminal 1. Nous fournissons dans la suite de ce paragraphe des exemples de la teneur de cette modification. Par exemple, elle consiste systématiquement en l'affectation de la valeur zéro aux bits décrivant une image complète contenue dans le flux multimédia. De façon alternative, cette modification prédéterminée consiste par exemple en la substitution, aux bits décrivant l'image complète considérée, de ceux décrivant l'image complète la précédant dans le flux multimédia. La modification prédéterminée peut enfin également consister en la substitution, aux bits décrivant l'image complète considérée, de ceux décrivant une image tierce, par exemple étrangère au flux multimédia. Ces modifications sont visibles et/ou audibles lorsque le flux multimédia modifié est joué par l'appareil multimédia 2.

Typiquement, la même modification prédéterminée est programmée dans tous les terminaux 1 avant leur mise en service.

L'observation d'un retard donné de déclenchement de la modification prédéterminée, ou d'une durée de jeu donnée des images complètes ou sons la supportant, dans le contenu multimédia modifié transmis par le composeur 17, donc ultérieurement dans le flux multimédia redistribué, puis acquis par le dispositif 5 d'identification de terminaux, permet ainsi de communiquer à ce dispositif 5 l'effectif précédemment calculé du groupe de bits de l'identifiant du terminal identifié par le paramètre 823 d'identifiant de groupe de bits.

Dès lors, lors de l'étape 107 déjà décrite, les composantes du flux multimédia combinées par le composeur 14 pour constituer le flux multimédia, puis transmises au contrôleur 17, comportent au moins une composante vidéo contenant les images complètes auxquelles a été appliquée la modification prédéterminée lors de l'opération 129. Le flux multimédia résultant est dit flux multimédia modifié.

Dès lors, lors de l'étape 109, le terminal 1 transmet ce flux multimédia modifié en tant que flux multimédia à jouer par l'appareil multimédia 2. Par conséquent, l'appareil multimédia 2 joue le flux multimédia modifié en clair.

En particulier, lors de l'étape 109, lorsque l'appareil multimédia 2 joue une séquence de sons ou d'images complètes modifiée lors de l'opération 129, l'occurrence de la modification dans le flux multimédia est rendue visible ou audible si la durée de jeu de la séquence est suffisante à sa perception par un être humain. Par exemple, l'affichage d'une séquence d'images dont les bits descriptifs se sont vus affecter la valeur zéro, se traduit par un écran noir dont la durée de jeu est celle de la séquence des images ainsi modifiées. De façon alternative, l'affichage d'une séquence d'images dont les bits descriptifs se sont vus substituer ceux de l'image précédant la séquence, ou ceux d'une image tierce par exemple étrangère au flux multimédia, se traduit par le figement de l'image substituée pendant une durée égale à la durée de jeu de la séquence des images ainsi modifiées. De façon analogue, le jeu d'une séquence de sons dont les bits descriptifs se sont vus affecter la valeur zéro, se traduit par un silence dont la durée est la durée de jeu de la séquence de sons ainsi modifiés. De façon alternative, le jeu d'une séquence de sons dont les bits descriptifs se sont vus substituer ceux du son précédant la séquence, ou ceux d'un son tiers par exemple étranger au flux multimédia, se traduit par la tenue du son substitué pendant une durée égale à la durée de jeu de la séquence de sons ainsi modifiés.

Dès lors, lors de l'étape 150, c'est encore ce flux multimédia modifié qui est filmé par la caméra 32, et transmis au serveur 34 de redistribution, puis, par ce dernier, aux terminaux 4 et au dispositif 5.

Enfin, lors d'une étape 130, le dispositif 5 d'identification de terminaux acquiert le flux multimédia modifié transmis par le terminal 1 et détermine l'identifiant du terminal ou du groupe de terminaux auquel il appartient, à partir de l'ordre 8 d'identification et de la présence ou de l'absence, en réponse, de la modification prédéterminée dans le flux multimédia acquis.

A cet effet, le module 53 d'acquisition de flux multimédias redistribués acquiert le flux multimédia redistribué, puis le transmet au module 51 d'identification de terminaux, qui détermine l'identifiant du terminal 1 utilisé pour redistribuer le contenu multimédia.

La détermination de l'identifiant du terminal 1 est réalisée à la volée au moment de l'acquisition du flux multimédia redistribué.

A cet effet, le module 51 d'identification de terminaux, réalise une analyse du flux multimédia redistribué, qui a pour objet de détecter l'occurrence de la modification prédéterminée dans le flux multimédia redistribué.

Étant donné que la modification prédéterminée est la même quel que soit l'identifiant du terminal 1, celle-ci est connue à l'avance par le module 51 qui peut donc facilement la rechercher dans le flux multimédia redistribué.

Selon que cette recherche soit, ou non, fructueuse, le module 51 en déduit que l'identifiant du terminal 1 satisfait, ou non, la précondition 81 de l'ordre 8 d'identification, ce qui permet de déterminer un ou plusieurs bits de cet identifiant. De plus, si l'opération 123 a été mise en oeuvre, le module 51 note l'instant où apparaît dans le flux redistribué la première image ayant subi la modification prédéterminée. Ici, pour simplifier, on considère que le temps de propagation du flux multimédia de la caméra 32 jusqu'au dispositif 5 est négligeable devant le retard calculé lors de l'opération 123. Dans ces conditions, la différence entre ce premier instant et l'instant de réception transmis par le synchroniseur 1a permet de calculer la valeur du retard utilisé lors de l'opération 129. De même, si l'opération 127 a été mise en oeuvre, le module 51 note, en plus du premier instant, un second instant correspondant à l'instant auquel apparaît dans le flux redistribué la dernière image ayant subi la modification prédéterminée. La différence entre les premier et second instants permet de calculer la durée de jeu utilisée lors de l'opération 129.

Ainsi, l'exécution de l'étape 130 révèle des informations sur l'identifiant du terminal 1 utilisé par le système 3.

Selon la stratégie adoptée, la réitération des étapes 110 à 130 peut permettre de déterminer complètement l'identifiant du terminal 1. Différents exemples de stratégies susceptibles d'être mises en oeuvre à l'aide du système 2B sont maintenant décrits :

### Stratégie 1) :

La précondition 81 teste un bit différent de l'identifiant du terminal 1 à chaque exécution de l'opération 121. Il suffit donc de réitérer les étapes 110, 120 et 130 autant de fois qu'il y a de bits dans l'identifiant du terminal. L'algorithme d'identification mis en oeuvre est alors un algorithme « séquentiel élémentaire ». Pour mettre en oeuvre ce premier exemple de stratégie, les paramètres 821, 822 et 823 ne sont pas utilisés. A cet effet, lors de l'étape 110, les valeurs de ces paramètres sont laissées vides. Dans ces conditions, les opérations 123 et 125 sont omises, et l'opération 127 est modifiée pour que la durée de jeu soit égale à une constante indépendante de la valeur de l'identifiant du terminal 1.

### Stratégie 2) :

Les paramètres 821 de retard de déclenchement, et 823 d'identifiant de groupe de bits ont reçu des valeurs non nulles lors de l'opération 112 et les étapes 123 et 125 sont exécutées. Lors de l'étape 130, le module 51 d'identification de terminaux détermine un retard de la modification prédéterminée, comme la durée séparant le début du segment concerné du flux multimédia redistribué et l'occurrence dans ce flux de cette modification. Par exemple, le module 51 détermine cette durée comme la durée de jeu des images séparant la première image du segment concerné du flux multimédia redistribué et la première image de ce flux portant la modification prédéterminée, c'est-à-dire le quotient du nombre de ces images par leur fréquence.

Le module 51 d'identification de terminaux déduit ensuite de ce retard de la modification prédéterminée, et des valeurs des paramètres 821 et 823 de retard de déclenchement et d'identifiant de groupe de bits, une information supplémentaire sur l'identifiant du terminal 1. Plus précisément, cette information supplémentaire est la valeur, calculée lors de l'opération 123, du groupe de bits identifié par le paramètre 823. Par exemple, le module 51 la calcule comme étant le quotient du retard de la modification prédéterminée, par la valeur du paramètre 821. Cette valeur est par exemple la valeur en décimal du groupe de bits identifié, et son codage en binaire fournit alors ce groupe de bits lui-même.

Comme plus haut, la répétition de la stratégie 2 pour chaque groupe de bits de longueur donnée de l'identifiant du terminal 1 suffit à déterminer la valeur de chacun des bits de cet identifiant, et donc cet identifiant en entier. Il s'agit là d'un algorithme « par groupe de bits de longueur donnée ».

Dans la stratégie 2), le paramètre 822 de borne est vide et l'opération 125 n'est pas exécutée.

Avec la stratégie 2), le nombre IT d'itérations nécessaires pour découvrir l'identifiant du terminal 1 en entier est fixe et égale à Ent(N/G)+1, où :
- N est le nombre de bits de l'identifiant du terminal 1,
- G est la longueur de chaque groupe de bits,
- Ent() est la fonction partie entière.

### Stratégie 3) :

La stratégie 3) est une combinaison des stratégies 1) et 2). A cet effet, la précondition 81 teste la valeur du premier bit de l'identifiant du terminal 1 non déjà déterminé. Le paramètre 821 de retard se voit affecter une valeur non nulle. Le paramètre 823 identifie le groupe des derniers bits de l'identifiant dont le premier bit est le bit testé par la précondition 81. Lors de l'opération 123 et de l'étape 130, la valeur de ce groupe de bits est prise égale au nombre de premiers bits consécutifs, du groupe de bits identifié par le paramètre 823, ayant la même valeur que le premier bit. Dans cet exemple, l'identifiant du terminal 1 est complètement déterminé, de proche en proche, selon un algorithme de « codage par plage », ou RLE, pour Run Length Encoding, en anglais.

Cette stratégie présente l'avantage de réduire en moyenne à presque N/4 le nombre d'itérations des étapes 110, 120 et 130 nécessaires pour déterminer tous les bits de l'identifiant du terminal 1, où N est le nombre de bits de l'identifiant. Par comparaison, le nombre d'itérations est de N si c'est la stratégie 1) qui est mise en oeuvre.

### Stratégie 4) :

La stratégie 4 est la même que la stratégie 3) sauf que le paramètre 822 de borne a une valeur non nulle. La valeur du paramètre 822 doit alors être prise en compte dans le calcul de l'information supplémentaire. Par exemple, si le retard, déterminé lors de l'étape 130, de la modification prédéterminée est égal à la valeur du paramètre 822, le module 51 en déduit que le retard de déclenchement initialement calculé lors de l'opération 123 était supérieur ou égal à cette valeur du paramètre 822. Le module 51 en déduit que les B/R -1 bits suivant immédiatement le bit testé par la précondition 81 ont la même valeur que ce bit testé par la précondition 81.

Cette stratégie 4) présente un nombre moyen d'itérations des étapes 110, 120 et 130 proche de celui de la stratégie 3) tout en limitant la durée maximale du retard appliqué à la modification prédéterminée.

De nombreux autres modes de réalisation de l'invention sont possibles. Par exemple, le contenu multimédia temporel peut être fourni, par le système 2B, protégé par un système d'accès conditionnel sans toutefois être embrouillé. Les opérations d'embrouillage et de désembrouillage intervenant dans la description doivent alors être omises, ainsi que l'encapsulation du mot de contrôle dans le message ECM. La structure 9 d'ECM peut donc ne pas encapsuler de mot de contrôle. L'embrouilleur 62 et le désembrouilleur 12 peuvent alors en outre ne pas apparaître dans le système 2B de fourniture de contenus multimédias.

Le contenu multimédia temporel peut également être fourni, par le système 2B, protégé au moyen d'un système de gestion de droits numériques, ou DRM, pour Digital Rights Management, en anglais. Les modules 63 de conditionnement d'accès et 11 d'accès conditionnel, sont alors respectivement remplacés par un module de conditionnement de contenus et un serveur de licences, et par un module de gestion de droits numériques. Les opérations d'embrouillage et de désembrouillage sont remplacées par des opérations de chiffrement et déchiffrement, réalisées par un module de chiffrement et un module de déchiffrement se substituant respectivement à l'embrouilleur 62 et au désembrouilleur 12. L'ECM 7 est alors enfin remplacé par une licence de gestion de droits numériques, dont la structure bien connue de l'homme du métier, encapsule, en lieu et place des conditions d'accès au contenu, la description des usages qu'il est permis d'en faire, et en lieu et place du mot de contrôle, la clé utile à son déchiffrement. L'ordre 8 d'identification est alors incorporé dans cette licence.

Alternativement, le contenu multimédia temporel peut également être fourni, par le système 2B, protégé par tout autre type de système de protection de contenus, tel par exemple qu'un système de protection de données plus classique ne réalisant pas de gestion de droits d'accès. Comme dans le cas précédent, les opérations d'embrouillage et de désembrouillage peuvent alors être remplacées par des opérations de chiffrement et déchiffrement, réalisées par un module de chiffrement et un module de déchiffrement se substituant respectivement à l'embrouilleur 62 et au désembrouilleur 12. L'ECM 7 est alors également remplacé par tout message propre au système de protection de données considéré, tel qu'un message d'un protocole d'établissement ou d'échange de clé. Dans ce cas, l'ordre 8 est incorporé à ce message.

Le contenu multimédia temporel peut enfin être fourni, par le système 2B, non protégé. Comme dans les cas précédents, le message ECM 7 peut alors également être remplacé par tout message de tout protocole de communication disponible entre le dispositif 5 d'identification de terminaux, ou la tête 6 de réseau, et le terminal 1. L'ordre 8 est alors incorporé dans l'un de ces messages.

Le contenu multimédia temporel peut également être acquis par le terminal en réception à la volée alors qu'il est transmis par tout lecteur de support mécanique de contenu multimédia temporel, tel qu'un lecteur de disque numérique audio ou vidéo, ou en lecture d'un support d'enregistrement après y avoir préalablement été enregistré.

Lors de l'étape 101 du procédé de la figure 3, le module 10 d'acquisition du terminal 1 peut alors acquérir le contenu multimédia synchronisé, en réception à la volée alors qu'il est transmis par le lecteur 19, ou en lecture dans la mémoire 18 après y avoir préalablement été enregistré. Dans les deux derniers cas, les instants d'occurrence, dans le flux multimédia résultant du jeu de ce contenu, des ordres 8 d'identification, doivent alors être connus du dispositif 5 d'identification de terminaux. Ils peuvent lui être fournis, par exemple sous l'un quelconque des formats décrits par ailleurs dans le document pour le premier cas, suite au conditionnement du contenu en vue de son enregistrement.

La mémoire 18, ici représentée comme interne au terminal 1, peut également être tout support d'enregistrement externe et raccordé au terminal 1.

L'appareil multimédia 2 peut également être tout dispositif apte à jouer le flux multimédia en clair. La liaison entre le terminal 1 et l'appareil multimédia 2 peut être à tout autre format existant à cet effet tel que DVI (Digital Visual Interface), DisplayPort, ou IEEE1394 « FireWire ».

Le module 15 de modification de flux multimédias peut également n'être activable que par le décodeur 13 ou par le composeur 14. Il peut également être, plutôt qu'indépendant, comme représenté sur la figure 3, intégré au décodeur 13 et/ou au composeur 14. De façon intermédiaire, cette intégration peut n'être que partielle, par exemple pour ne concerner qu'une partie des fonctions du module 15.

La caméra 32 peut être tout dispositif de capture apte à capturer le flux multimédia en clair tel que joué par l'appareil multimédia 2 pour générer un flux multimédia en clair redistribuable.

De façon alternative, l'entrée du serveur 34 de redistribution est directement raccordée à la sortie du terminal 1. Il peut ainsi directement obtenir le flux multimédia en clair apte à être joué par l'appareil multimédia 2, puis le transmettre, via le réseau 35, à la pluralité de terminaux 4.

En variante, l'entrée du serveur 34 n'est pas physiquement raccordée à la sortie du terminal 1 ou de la caméra 32. La transmission du contenu au serveur 34, à l'étape 150, est alors précédée de sa mémorisation par le terminal 1 ou la caméra 32, dans une mémoire du terminal 1 ou du système 3 de redistribution, ou un support d'enregistrement connecté à celui-ci.

Dans une autre variante, l'instant initial de décompte du retard de la modification prédéterminée associée à l'ordre 8 peut aussi être calculé en prenant en compte le temps de propagation du flux multimédia de la caméra 32 jusqu'au dispositif 5. Ce temps de propagation est appelé « temps de cycle ». A cet effet, préalablement à la mise en oeuvre des étapes 110, 120 et 130, le temps de cycle du système 3 est estimé par des méthodes connues. Par exemple, le système 2A transmet un ordre 8 qui déclenche l'application par chaque terminal d'une modification prédéterminée avec un retard égal à zéro. Le temps de cycle du système 3 est alors estimé à partir de la différence entre la date de réception de l'ordre 8 transmise par le synchroniseur 1a et l'instant où cette modification est détectée dans le flux multimédia redistribué.

Dans un autre mode de réalisation, le synchroniseur 1a du système 2A d'identification de terminaux, est intégré au dispositif 5 d'identification de terminaux.

De façon alternative, le système 2A ne comporte pas de synchroniseur 1a.

Par exemple, lors de l'étape 144, le module 63 reçoit en retour du multiplexeur 64 un identifiant d'une image ou d'un segment de plusieurs images du contenu multimédia compressé auquel est synchronisé l'ECM 7. Cet identifiant est transmis au module 51 d'identification de terminaux. Le module 51 mémorise cet identifiant en relation avec l'ordre 8 d'identification.

L'identifiant peut être un numéro d'ordre de l'image dans le flux multimédia considéré depuis le début de ce flux, ou la durée de jeu « direct » la séparant de la première image du flux, qui peut être calculée à partir de son numéro d'ordre et de la fréquence des images de la composante vidéo. Il peut également s'agir d'un condensé cryptographique de cette image.

L'identifiant peut aussi être un identifiant du premier son, appartenant au segment synchronisé avec l'ECM 7, d'une composante audio du contenu. Typiquement, cet identifiant est défini de façon analogue à celui de l' image ci-dessus.

Lors de l'étape 130, le module 51 utilise cet identifiant pour déterminer l'instant où l'image ou le segment d'images transmis en même temps que l'ordre 8 apparaît dans le flux multimédia redistribué. Cet instant est alors utilisé comme instant initial de décompte du retard de la modification prédéterminée associée à l'ordre 8. On remarquera qu'avec cette méthode, le temps de cycle du système 3 est pris en compte et n'a pas besoin d'être individuellement connu.

Dans un deuxième mode de réalisation, le paramètre 823 d'identifiant de groupe de bits peut ne comporter que l'entier i, et identifier ainsi le groupe de bits de l'identifiant du terminal commençant à son bit d'indice i et comportant tous ses bits suivants.

Toute syntaxe autre que celle présentée dans le présent exemple de réalisation peut cependant être donnée aux paramètres 821, 822 et 823.

Lors de l'étape 142, l'embrouilleur 62 peut alternativement, embrouiller différentes composantes ou différents groupes de composantes du contenu multimédia compressé avec différents mots de contrôle. Il transmet alors ces différents mots de contrôle au module 63 de conditionnement d'accès, qui encapsule ensuite chacun d'eux, lors de l'étape 144, dans un message ECM qu'il dote ainsi de la structure 9. Plusieurs messages ECM pouvant encapsuler plusieurs mots de contrôle sont en conséquence susceptibles d'être traîtés, de façon connue de l'homme du métier, aux étapes ultérieures 101, 103 et 105.

Lors de l'étape 144, le module 63 de conditionnement d'accès peut encapsuler l'ordre 8 d'identification dans un message de gestion des titres d'accès, ou message EMM, pour Entitlement Management Message, en anglais, à transmettre au terminal 1 par la tête 6 de réseau, ou dans tout autre message à transmettre au terminal 1 par la tête 6 de réseau, de façon synchronisée ou non avec le contenu multimédia embrouillé.

Lors de l'opération 112, la liste 82 de paramètres construite par le module 51 d'identification de terminaux peut ne pas comporter de paramètre 822 de borne. Dans ce cas, l'opération 125 est omise. La liste 82 peut également être vide ; dans ce dernier cas, l'ordre 8 d'identification construit peut ne pas comporter de liste 82 de paramètres. C'est par exemple possible si la stratégie 1) précédemment décrite est mise en oeuvre dans le système 2B.

Lors de l'opération 114, la précondition 81 construite par le module 51 d'identification de terminaux peut comporter un critère testant la mémorisation dans le terminal 1, de toute donnée propre au système d'accès conditionnel.

Lors de l'opération 114, la précondition 81 construite par le module 51 d'identification de terminaux peut être vide. Dans ce cas, l'opération 114 du procédé de la figure 3 peut être omise. Dans ce dernier cas, l'ordre 8 d'identification construit peut ne pas comporter de précondition 81. Par exemple, lorsque la stratégie 2) est utilisée indépendamment de la stratégie 1), la précondition 81 peut être omise.

Lors de l'étape 116, le module 51 d'identification de terminaux peut transmettre l'ordre 8 d'identification directement au terminal 1, sans recourir à la tête 6 de réseau, via tout réseau par l'intermédiaire duquel le dispositif 5 d'identification de terminaux et le terminal 1 peuvent communiquer. Par exemple, si le terminal 1 reçoit le flux multimédia synchronisé par l'intermédiaire d'un réseau satellitaire unidirectionnel, le dispositif 5 peut utiliser le réseau Internet pour transmettre l'ordre d'identification au terminal 1.

Lors de l'étape 120, si l'ordre 8 d'identification ne comporte pas de précondition 81, l'opération 121 est omise. Par exemple, lors de l'opération 121, si l'ordre 8 d'identification comporte une précondition 81 vide, celle-ci est interprétée comme satisfaite par l'identifiant de tout terminal 1. De même, s'il ne comporte pas de liste 82 de paramètres, les opérations 123, 125, 127 et 129 sont omises.

Lors de l'opération 123, tout autre mode de calcul d'un retard de déclenchement en fonction de la valeur R du paramètre 821 de retard et d'une valeur du groupe de bits identifié par le paramètre 823 d'identifiant de groupe de bits, peut être mis en oeuvre. Il peut par exemple s'agir du quotient de la valeur R par la valeur du groupe de bits. Lors de l'étape 130, ladite valeur du groupe de bits identifié par le paramètre 823, est alors calculée comme quotient de la valeur du paramètre 821 par le retard déterminé de la modification prédéterminée.

Lors de l'opération 123, toute autre valeur du groupe de bits identifié par le paramètre 823 d'identifiant de groupe de bits peut être considérée. Il peut notamment s'agir d'un effectif, par exemple le nombre de bits du groupe de bits identifié qui ont une valeur donnée. Dans le deuxième mode de réalisation déjà évoqué, cet effectif est calculé comme le nombre des premiers bits du groupe de bit identifié qui ont la même valeur que son premier bit.

Le retard calculé est nul, ou l'opération 123 omise, si l'un au moins des paramètres 821 de retard, et 823 d'identifiant de groupe de bits, ne s'est pas vu affecter de valeur.

Lors de l'opération 125, tout autre mode de limitation du retard de déclenchement peut être mis en oeuvre. Par exemple, lorsque le retard de déclenchement est calculé comme le quotient de la valeur R sur la valeur du groupe de bits identifié, s'il est inférieur à la valeur B du paramètre 822 de borne, le module 15 octroie cette valeur B au retard de déclenchement ; sinon, la valeur du retard de déclenchement précédemment calculée est laissée inchangée.

L'opération 125 est omise si le paramètre 822 de borne ne s'est pas vu affecter de valeur.

Les variantes ci-dessus décrites des opérations 123 et 125 de calcul et limitation d'un retard de déclenchement, s'appliquent également à l'opération 127 pour ce qui concerne calcul et limitation d'une durée de jeu.

Lors de l'opération 129, la modification prédéterminée réalisée du flux multimédia, peut être limitée aux bits décrivant une partie seulement de l'image complète considérée. La partie considérée de l'image complète est par exemple un rectangle en couvrant une fraction suffisante pour que la détection ultérieure en soit assez facile. Une telle fraction est par exemple supérieure à un millième de la taille de l'image.

De façon alternative, lorsque le flux multimédia comprend plusieurs composantes vidéo, la modification prédéterminée peut être limitée aux bits décrivant l'image complète considérée dans l'une seule des composantes vidéo du flux multimédia, ou dans une partie seule de leur ensemble.

De façon alternative, lors de l'opération 129, la modification prédéterminée d'au moins une partie des bits d'information nécessaires pour jouer un son ou afficher une image complète contenu dans le flux multimédia, consiste par exemple en l'affectation de la valeur zéro aux bits décrivant un son, c'est-à-dire d'un échantillon audio. De façon alternative, cette modification prédéterminée consiste par exemple en la substitution, aux bits décrivant le son, ou échantillon audio, considéré, de ceux décrivant le son, ou échantillon audio, le précédant dans le flux multimédia. La modification prédéterminée peut enfin également consister en la substitution, aux bits décrivant le son, ou à l'échantillon audio, considéré, de ceux décrivant un son, ou d'un échantillon audio, tiers, par exemple étranger au flux multimédia.

De façon alternative, lorsque le flux multimédia comprend plusieurs composantes audio, la modification prédéterminée peut être telle que ci-dessus décrite, mais limitée aux bits décrivant le son, ou à l'échantillon audio, considéré, dans l'une seule des composantes audio du flux multimédia, ou dans une partie seule de leur ensemble.

De façon alternative, lors de l'opération 129, la modification prédéterminée est déclenchée par le module 15 de modification de flux multimédias auprès du module 11 d'accès conditionnel. Par exemple, le module 11 transmet, lors de l'étape 103, un mot de contrôle erroné, c'est-à-dire différent du mot de contrôle encapsulé dans l'ECM en cours de traitement, au désembrouilleur 12. Il peut par exemple s'agir du cryptogramme non déchiffré du mot de contrôle tel que typiquement encapsulé dans l'ECM 7, du dernier mot de contrôle déjà transmis, ou d'une valeur fixe arbitraire, par exemple nulle. Lors de l'étape 105, la tentative du désembrouilleur 12 de désembrouiller, à l'aide du mot de contrôle erroné, le contenu multimédia embrouillé, ne lui permet pas de restituer le contenu multimédia compressé en clair. A son tour, le décodeur 13, échoue, lors de l'étape 105, à décompresser le contenu multimédia erroné résultant. En réponse, le décodeur 13 réalise alors lui-même la modification prédéterminée de ce contenu. Dans ce mode de réalisation, le décodeur 13 est programmé pour réaliser la modification prédéterminée, telle que celles déjà décrites, en cas d'échec du décodage. La suite du procédé est alors identique à ce qui a déjà été décrit.

De façon alternative, lors de l'étape 109, le terminal 1 transmet directement ce flux multimédia modifié au serveur 34 de redistribution, lorsque l'entrée de celui-ci est directement raccordée à la sortie du terminal 1. Le jeu, par l'appareil multimédia 2, du flux multimédia modifié en clair, ou l'intégration même de cet appareil multimédia 2 au système 2B de fourniture de contenus multimédias, ainsi que l'intégration de la caméra 32 au système 3 de redistribution de flux multimédias, peuvent alors être omis.

Lors de l'étape 130, le module 53 d'acquisition de flux multimédias redistribués peut, après l'avoir acquis, mémoriser le flux multimédia redistribué dans une mémoire du dispositif 5 d'identification de terminaux, ou dans un support d'enregistrement connecté à celui-ci. La détermination, par le module 51 de l'identifiant du terminal 1 peut alors être réalisée plus tard à partir du flux multimédia enregistré.

Lors de l'étape 130, de façon alternative, le module 51 d'identification de terminaux détermine le retard de la modification prédéterminée, comme la durée de jeu des échantillons audio séparant le premier échantillon audio du segment concerné du flux multimédia redistribué et le premier échantillon audio de ce flux portant la modification prédéterminée, c'est-à-dire le quotient du nombre de ces échantillons audio par leur fréquence.

Le module 51 peut également, lors de cette étape 130, déterminer le retard de la modification prédéterminée à l'aide d'une référence temporelle extérieure au flux multimédia redistribué, telle par exemple qu'une horloge interne au dispositif 5.

Alternativement, lors de l'étape 130, si l'ordre 8 d'identification comporte une liste 82 de paramètres non vide dans laquelle les paramètres 821 de retard de déclenchement, et 823 d'identifiant de groupe de bits ont reçu des valeurs, le module 51 d'identification de terminaux détermine une durée de jeu comme la durée séparant, dans le flux multimédia redistribué, le début et la fin de l'occurrence dans ce flux de la modification prédéterminée. Par exemple, le module 51 détermine cette durée comme le quotient du nombre d'images successives ayant subi la modification prédéterminée par la fréquence de jeu de ces images. Cette durée de jeu est alors ensuite exploitée en lieu et place du retard de la modification prédéterminée, pour déterminer une valeur du groupe de bits identifié par le paramètre 823.

## Revendications

1. Procédé d'identification de terminal dans un système de fourniture de contenus multimédia, dans lequel :
a) un terminal acquiert (101, 103) puis décode (105, 107, 109) un contenu multimédia temporel pour générer un flux multimédia en clair comportant au moins une succession temporelle d'intervalles de temps cadencés à une fréquence prédéfinie, l'ensemble des bits d'information nécessaires pour afficher une seule image complète ou jouer un son sur un appareil multimédia étant transmis pendant un seul intervalle de temps, et chaque intervalle de temps correspondant à une seule image ou à un seul son, ce flux multimédia étant apte à être joué par un appareil multimédia raccordé à ce terminal,
b) un dispositif d'identification de terminaux transmet (116, 144, 103) un ordre d'identification à ce terminal,
**caractérisé en ce que** :
c) en réponse à cet ordre, le terminal déclenche (129) et, en alternance, inhibe une modification prédéterminée d'au moins une partie des bits d'information nécessaires pour jouer un son ou afficher une image complète contenu dans le flux multimédia de manière à obtenir un flux multimédia modifié, et transmet (109) ce flux multimédia modifié en tant que flux multimédia à jouer par l'appareil multimédia, le choix entre déclencher et inhiber la modification prédéterminée étant réalisé en fonction d'un identifiant du terminal ou d'un groupe de terminaux auxquels ce terminal appartient, et la teneur de ladite modification prédéterminée étant indépendante de l'identifiant du terminal ou du groupe de terminaux auquel il appartient,
d) le dispositif d'identification de terminaux acquiert le flux multimédia modifié transmis par le terminal et détermine (5) l'identifiant du terminal ou du groupe de terminaux auquel il appartient, à partir de l'ordre transmis et de la présence ou de l'absence, en réponse, de la modification prédéterminée dans le flux multimédia acquis, et indépendamment de la teneur de ladite modification prédéterminée.

2. Le procédé selon la revendication 1, dans lequel :
- à l'étape b), le dispositif d'identification construit une précondition (81) et l'insère (114) dans l'ordre (8) d'identification à transmettre, cette précondition testant la présence ou la valeur d'au moins un paramètre préenregistré dans un terminal, cette précondition étant construite de manière à être vérifiée uniquement par une partie des terminaux auxquels l'ordre d'identification est transmis,
- à l'étape c), le terminal évalue (121) d'abord la précondition, puis déclenche et, en alternance, inhibe la modification prédéterminée en fonction du résultat de l'évaluation de la précondition.

3. Le procédé selon l'une quelconque des revendications précédentes, dans lequel :
- à l'étape a), le terminal acquiert, désembrouille puis décode le contenu multimédia temporel protégé par un système d'accès conditionnel, et
- à l'étape b), le dispositif d'identification de terminaux transmet l'ordre d'identification au terminal dans un message (7) de contrôle des titres d'accès ou de gestion des titres d'accès, fourni et synchronisé avec le contenu temporel protégé.

4. Le procédé selon l'une quelconque des revendications précédentes, dans lequel :
- à l'étape a), un composeur (14) reçoit les composantes décompressées du flux multimédia, puis les combine pour constituer le flux multimédia, et transmet ce dernier sur sa sortie, et
- à l'étape c), en réponse à l'ordre d'identification, le composeur (14) du terminal déclenche ou réalise la modification prédéterminée d'au moins une partie des bits d'information nécessaires pour jouer un son ou afficher une image complète contenu dans le flux multimédia de manière à obtenir le flux multimédia modifié.

5. Procédé de génération, par un terminal, d'un flux multimédia modifié pour la mise en oeuvre du procédé de la revendication 1, dans lequel :
- à l'étape a), le terminal acquiert (101, 103) puis décode (105, 107, 109) un contenu multimédia temporel pour générer un flux multimédia en clair comportant au moins une succession temporelle d'intervalles de temps cadencés à une fréquence prédéfinie, l'ensemble des bits d'informations nécessaire pour afficher une seule image complète ou jouer un son sur un appareil multimédia étant transmis pendant un seul intervalle de temps, et chaque intervalle de temps correspondant à une seule image ou à un seul son, ce flux multimédia étant apte à être joué par un appareil multimédia raccordé à ce terminal,
- à l'étape b), le terminal acquiert (101, 103) un ordre d'identification transmis par le dispositif d'identification de terminaux,
**caractérisé en ce que**, en réponse à cet ordre, à l'étape c), le terminal déclenche (129) et, en alternance, inhibe une modification prédéterminée d'au moins une partie des bits d'informations nécessaires pour jouer un son ou afficher une image complète contenu dans le flux multimédia de manière à obtenir un flux multimédia modifié et transmet (109) ce flux multimédia modifié en tant que flux multimédia à jouer par l'appareil multimédia,
le choix entre déclencher et inhiber la modification prédéterminée étant réalisé en fonction d'un identifiant du terminal ou d'un groupe de terminaux auxquels ce terminal appartient, et
la teneur de ladite modification prédéterminée étant indépendante de l'identifiant du terminal ou du groupe de terminaux auxquels il appartient.

6. Le procédé selon la revendication 5, dans lequel :
- à l'étape b), l'ordre (8) d'identification acquis comporte une précondition (81), cette précondition testant la présence ou la valeur d'au moins un paramètre préenregistré dans un terminal, cette précondition étant construite de manière à être vérifiée uniquement par une partie des terminaux auxquels l'ordre d'identification est transmis,
- à l'étape c), le terminal évalue (121) d'abord la précondition, puis déclenche la modification prédéterminée en fonction du résultat de l'évaluation de la précondition.

7. Le procédé selon la revendication 6, dans lequel la précondition est une combinaison (811) de critères, chacun d'un type choisi dans un ensemble composé des types suivants :
- un critère d'index, comportant un paramètre de valeur, vrai si le bit de l'identifiant du terminal, d'index donné par le paramètre de valeur, a une valeur prédéterminée,
- un critère d'identifiant, comportant un paramètre de valeur et un paramètre de masque, vrai si les bits de l'identifiant du terminal sélectionnés ou masqués par le paramètre de masque, ont les mêmes valeurs que ceux du paramètre de valeur,
- un critère d'identifiant, comportant un paramètre de masque et un paramètre d'effectif, vrai si le nombre des bits de l'identifiant du terminal sélectionnés ou masqués par le paramètre de masque qui ont une valeur prédéterminée, est égal au paramètre d'effectif,
- un critère d'événement, comportant une liste d'identifiants d'événements, vrai si chacun des identifiants d'événements de la liste est mémorisé dans le terminal, un événement étant un phénomène identifiable par le terminal et qui, lorsqu'il se produit, déclenche l'enregistrement par le terminal d'un identifiant de cet événement et, à l'inverse, tant que cet événement ne se produit pas, aucun identifiant de cet événement n'est enregistré par le terminal, l'identifiant d'événement permettant de distinguer cet événement parmi l'ensemble des autres événements identifiables par le terminal,
- un critère d'événement, comportant une liste d'identifiants d'événements, vrai si chacun des identifiants d'événements de la liste n'est pas mémorisé dans le terminal,
- un critère de titres d'accès, comportant une liste d'identifiants de titres d'accès, vrai si chacun des identifiants de titres d'accès de la liste est mémorisé dans le terminal,
- un critère de titres d'accès, comportant une liste d'identifiants de titres d'accès, vrai si chacun des identifiants de titres d'accès de la liste n'est pas mémorisé dans le terminal,
- un critère de temps de fonctionnement, comportant un paramètre de durée, vrai si le terminal est en fonctionnement depuis une durée supérieure à celle exprimée par son paramètre de durée,
- un critère de temps de fonctionnement, comportant un paramètre de durée, vrai si le terminal est en fonctionnement depuis une durée inférieure à celle exprimée par son paramètre de durée,
- un critère de période de fonctionnement, comportant une liste d'associations d'intervalles de temps à un canal, vrai si pour chacune des associations, le terminal a été en fonctionnement sur ce canal, au cours de chacun de ces intervalles de temps,
- un critère de période de fonctionnement, comportant une liste d'associations d'intervalles de temps à un canal, vrai si pour chacune des associations, le terminal n'a pas été en fonctionnement sur ce canal, au cours de chacun de ces intervalles de temps.

8. Le procédé selon l'une quelconque des revendications 5 à 7, dans lequel, à l'étape c), le terminal calcule (123), en fonction de son identifiant, la durée de l'intervalle de temps entre l'instant où l'ordre d'identification est reçu et l'instant où le terminal déclenche la modification prédéterminée, puis déclenche la modification prédéterminée après avoir laissé s'écouler une durée égale à la durée calculée.

9. Le procédé selon la revendication 8, dans lequel :
- à l'étape b), l'ordre d'identification acquis comporte un paramètre (821) de retard, un paramètre (822) de borne et un paramètre (823) d'identifiant de groupe de bits,
- à l'étape c), le terminal calcule (123) la durée en fonction de celle exprimée par le paramètre de retard, et d'une valeur du groupe de bits de l'identifiant du terminal, identifié par le paramètre d'identifiant de groupe de bits, et
- à l'étape c), le terminal limite (125) la durée calculée à une durée déterminée en fonction du paramètre de borne si la durée calculée dépasse la durée déterminée en fonction de ce paramètre de borne, et le terminal laisse la durée calculée inchangée si la durée calculée est inférieure à la durée déterminée en fonction du paramètre de borne.

10. Le procédé selon l'une quelconque des revendications 5 à 9 dans lequel, à l'étape c), le terminal calcule (127) une durée de jeu en fonction de son identifiant, puis déclenche ou non une modification prédéterminée d'au moins une partie des bits d'informations nécessaires pour jouer un son ou afficher une image complète contenu dans le flux multimédia, répétée de sorte que la durée de jeu des sons ou images complètes ainsi modifiées soit égale à la durée de jeu calculée.

11. Procédé de détermination d'identifiant de terminal, par un dispositif d'identification de terminaux, pour la mise en oeuvre d'un procédé conforme à la revendication 1, dans lequel :
- à l'étape b), le dispositif d'identification de terminaux transmet (116) un ordre d'identification à ce terminal,
- à l'étape d) (130), le dispositif d'identification de terminaux acquiert le flux multimédia modifié transmis par le terminal,
**caractérisé en ce que** le dispositif d'identification de terminaux, à l'étape d) (130), détermine un identifiant du terminal ou d'un groupe de terminaux auquel il appartient,
• à partir de l'ordre transmis, et
• à partir de la présence et, en alternance, de l'absence, en réponse à cet ordre transmis, de la modification prédéterminée dans le flux multimédia acquis, et
• indépendamment de la teneur de ladite modification prédéterminée contenue dans le flux multimédia acquis.

12. Support d'enregistrement d'informations (18, 52), **caractérisé en ce qu'**il comporte des instructions pour l'exécution d'un procédé conforme à l'une quelconque des revendications 5 à 11, lorsque ces instructions sont exécutées par un calculateur électronique.

13. Terminal (1) pour la mise en oeuvre d'un procédé de génération d'un flux multimédia modifié conforme à l'une quelconque des revendications 5 à 10, dans lequel le terminal est apte :
- à une étape a), à acquérir puis décoder un contenu multimédia temporel pour générer un flux multimédia en clair comportant une succession temporelle de sons ou d'images, ce flux multimédia étant apte à être joué par un appareil multimédia (2, 4) raccordé à ce terminal,
- à une étape b), à acquérir un ordre d'identification transmis par le dispositif (5) d'identification de terminaux,
**caractérisé en ce que** ce terminal comporte un calculateur électronique (16) programmé pour, en réponse à cet ordre, mettre en oeuvre une étape c) de déclenchement, et, en alternance, d'inhibition, d'une modification prédéterminée d'au moins une partie des bits d'informations nécessaires pour jouer un son ou afficher une image complète contenu dans le flux multimédia de manière à obtenir un flux multimédia modifié, et de transmission de ce flux multimédia modifié en tant que flux multimédia à jouer par l'appareil multimédia,
le choix entre déclencher et inhiber la modification prédéterminée étant réalisé en fonction d'un identifiant du terminal ou d'un groupe de terminaux auxquels ce terminal appartient, et
la teneur de ladite modification prédéterminée étant indépendante de l'identifiant du terminal ou du groupe de terminaux auquel il appartient.

14. Dispositif (5) d'identification de terminaux pour la mise en oeuvre d'un procédé de détermination d'identifiant de terminal conforme à la revendication 11, dans lequel le dispositif est apte :
- à une étape b), à transmettre un ordre d'identification à ce terminal,
- à une étape d), à acquérir le flux multimédia modifié transmis par le terminal, **caractérisé en ce que** le dispositif d'identification de terminaux comporte un calculateur électronique (54) programmé pour, à l'étape d), déterminer un identifiant du terminal ou d'un groupe de terminaux auquel il appartient :
• à partir de l'ordre transmis, et
• à partir de la présence et, en alternance, de l'absence, en réponse à cet ordre transmis, de la modification prédéterminée dans le flux multimédia acquis, et
• indépendamment de la teneur de ladite modification prédéterminée contenue dans le flux multimédia acquis.

## Patentansprüche

1. Verfahren zur Identifizierung von Endgeräten in einem System zur Bereitstellung von Multimedia-Inhalten, wobei:
a) ein Endgerät einen zeitlichen Multimedia-Inhalt erfasst (101, 103) und anschließend decodiert (105, 107, 109), um einen Multimediastrom in unverschlüsselter Form zu erzeugen, der wenigstens eine zeitliche Abfolge von Zeitintervallen aufweist, die mit einer vordefinierten Frequenz getaktet sind, wobei die Menge der Informationsbits, die notwendig sind, um auf einem Multimediagerät ein einziges vollständiges Bild anzuzeigen oder einen Ton abzuspielen, während eines einzigen Zeitintervalls übertragen wird und jedes Zeitintervall einem einzigen Bild oder einem einzigen Ton entspricht, wobei dieser Multimediastrom geeignet ist, von einem an dieses Endgerät angeschlossenen Multimediagerät abgespielt zu werden,
b) eine Vorrichtung zur Identifizierung von Endgeräten einen Identifizierungsbefehl zu diesem Endgerät überträgt (116, 144, 103),
**dadurch gekennzeichnet, dass**:
c) in Reaktion auf diesen Befehl das Endgerät eine vorbestimmte Modifikation wenigstens eines Teils der Informationsbits, die notwendig sind, um einen Ton abzuspielen oder ein vollständiges Bild anzuzeigen, der bzw. das in dem Multimediastrom enthalten ist, auslöst (129) oder, alternativ dazu, verhindert, um einen modifizierten Multimediastrom zu erhalten, und diesen modifizierten Multimediastrom als von dem Multimediagerät abzuspielenden Multimediastrom überträgt (109), wobei die Wahl zwischen Auslösen und Verhindern der vorbestimmten Modifikation in Abhängigkeit von einer Kennung des Endgerätes oder einer Gruppe von Endgeräten, zu denen dieses Endgerät gehört, getroffen wird und der Inhalt der vorbestimmten Modifikation unabhängig von der Kennung des Endgerätes oder der Gruppe von Endgeräten, zu der es gehört, ist,
d) die Vorrichtung zur Identifizierung von Endgeräten den modifizierten Multimediastrom erfasst, der von dem Endgerät übertragen wird, und die Kennung des Endgerätes oder der Gruppe von Endgeräten, zu der es gehört, aus dem übertragenen Befehl und aus dem Vorhandensein oder dem Nichtvorhandensein, als Reaktion, der vorbestimmten Modifikation in dem erfassten Multimediastrom und unabhängig vom Inhalt der vorbestimmten Modifikation bestimmt (5).

2. Verfahren nach Anspruch 1, wobei:
- in Schritt b) die Vorrichtung zur Identifizierung eine Vorbedingung (81) konstruiert und sie in den zu übertragenden Identifizierungsbefehl (8) einfügt (114), wobei diese Vorbedingung das Vorhandensein oder den Wert wenigstens eines Parameters testet, der in einem Endgerät vorregistriert ist, wobei diese Vorbedingung so konstruiert wird, dass sie nur von einem Teil der Endgeräte erfüllt wird, zu denen der Identifizierungsbefehl übertragen wird,
- in Schritt c) das Endgerät zuerst die Vorbedingung auswertet (121) und anschließend in Abhängigkeit vom Ergebnis der Auswertung der Vorbedingung die vorbestimmte Modifikation auslöst oder, alternativ dazu, verhindert.

3. Verfahren nach einem der vorhergehenden Ansprüche, wobei:
- in Schritt a) das Endgerät den zeitlichen Multimedia-Inhalt, der durch ein bedingtes Zugangssystem geschützt ist, erfasst, entwürfelt und anschließend decodiert, und
- in Schritt b) die Vorrichtung zur Identifizierung von Endgeräten den Identifizierungsbefehl zu dem Endgerät in einer Nachricht (7) zur Kontrolle der Zugangsberechtigungen oder zur Verwaltung der Zugangsberechtigungen überträgt, die mit dem geschützten zeitlichen Inhalt geliefert und synchronisiert wird.

4. Verfahren nach einem der vorhergehenden Ansprüche, wobei:
- in Schritt a) ein Composer (14) die dekomprimierten Komponenten des Multimediastroms empfängt, sie anschließend kombiniert, um dem Multimediastrom zu bilden, und diesen Letzteren auf seinen Ausgang überträgt, und
- in Schritt c), in Reaktion auf den Identifizierungsbefehl, der Composer (14) des Endgerätes die vorbestimmte Modifikation wenigstens eines Teils der Informationsbits, die notwendig sind, um einen Ton abzuspielen oder ein vollständiges Bild anzuzeigen, der bzw. das in dem Multimediastrom enthalten ist, auslöst oder durchführt, um den modifizierten Multimediastrom zu erhalten.

5. Verfahren zur Erzeugung, durch ein Endgerät, eines modifizierten Multimediastroms für die Durchführung des Verfahrens nach Anspruch 1, wobei:
- in Schritt a) das Endgerät einen zeitlichen Multimedia-Inhalt erfasst (101, 103) und anschließend decodiert (105, 107, 109), um einen Multimediastrom in unverschlüsselter Form zu erzeugen, der wenigstens eine zeitliche Abfolge von Zeitintervallen aufweist, die mit einer vordefinierten Frequenz getaktet sind, wobei die Menge der Informationsbits, die notwendig ist, um auf einem Multimediagerät ein einziges vollständiges Bild anzuzeigen oder einen Ton abzuspielen, während eines einzigen Zeitintervalls übertragen wird und jedes Zeitintervall einem einzigen Bild oder einem einzigen Ton entspricht, wobei dieser Multimediastrom geeignet ist, von einem an dieses Endgerät angeschlossenen Multimediagerät abgespielt zu werden,
- in Schritt b) das Endgerät einen Identifizierungsbefehl erfasst (101, 103), der von der Vorrichtung zur Identifizierung von Endgeräten übertragen wird,
**dadurch gekennzeichnet, dass** in Reaktion auf diesen Befehl, in Schritt c), das Endgerät eine vorbestimmte Modifikation wenigstens eines Teils der Informationsbits, die notwendig sind, um einen Ton abzuspielen oder ein vollständiges Bild anzuzeigen, der bzw. das in dem Multimediastrom enthalten ist, auslöst (129) oder, alternativ dazu, verhindert, um einen modifizierten Multimediastrom zu erhalten, und diesen modifizierten Multimediastrom als von dem Multimediagerät abzuspielenden Multimediastrom überträgt (109),
wobei die Wahl zwischen Auslösen und Verhindern der vorbestimmten Modifikation in Abhängigkeit von einer Kennung des Endgerätes oder einer Gruppe von Endgeräten, zu denen dieses Endgerät gehört, getroffen wird, und
der Inhalt der vorbestimmten Modifikation unabhängig von der Kennung des Endgerätes oder der Gruppe von Endgeräten, zu der es gehört, ist.

6. Verfahren nach Anspruch 5, wobei:
- in Schritt b) der erfasste Identifizierungsbefehl (8) eine Vorbedingung (81) aufweist, wobei diese Vorbedingung das Vorhandensein oder den Wert wenigstens eines Parameters testet, der in einem Endgerät vorregistriert ist, wobei diese Vorbedingung so konstruiert wird, dass sie nur von einem Teil der Endgeräte erfüllt wird, zu denen der Identifizierungsbefehl übertragen wird,
- in Schritt c) das Endgerät zuerst die Vorbedingung auswertet (121) und anschließend in Abhängigkeit vom Ergebnis der Auswertung der Vorbedingung die vorbestimmte Modifikation auslöst.

7. Verfahren nach Anspruch 6, wobei die Vorbedingung eine Kombination (811) von Kriterien ist, die jeweils von einem Typ sind, der aus einer Menge ausgewählt ist, die aus den folgenden Typen besteht:
- einem Indexkriterium, das einen Wertparameter umfasst und das erfüllt ist, falls das Bit der Kennung des Endgerätes mit einem durch den Wertparameter gegebenen Index einen vorbestimmten Wert hat,
- einem Kennungskriterium, das einen Wertparameter und einen Maskenparameter umfasst und das erfüllt ist, falls die Bits der Kennung des Endgerätes, die durch den Maskenparameter ausgewählt oder maskiert sind, dieselben Werte wie diejenigen des Wertparameters haben,
- einem Kennungskriterium, das einen Maskenparameter und einen Anzahlparameter umfasst und das erfüllt ist, falls die Anzahl der durch den Maskenparameter ausgewählten oder maskierten Bits der Kennung des Endgerätes, welche einen vorbestimmten Wert haben, gleich dem Anzahlparameter ist,
- einem Ereigniskriterium, das eine Liste von Kennungen von Ereignissen umfasst und das erfüllt ist, falls jede der Kennungen von Ereignissen der Liste in dem Endgerät gespeichert ist, wobei ein Ereignis ein Phänomen ist, das durch das Endgerät identifizierbar ist und das, wenn es eintritt, die Registrierung einer Kennung dieses Ereignisses durch das Endgerät auslöst, und wobei umgekehrt, solange dieses Ereignis nicht eintritt, keine Kennung dieses Ereignisses durch das Endgerät registriert wird, wobei die Ereigniskennung ermöglicht, dieses Ereignis in der Menge der anderen Ereignisse, die durch das Endgerät identifizierbar sind, zu unterscheiden,
- einem Ereigniskriterium, das eine Liste von Kennungen von Ereignissen umfasst und das erfüllt ist, falls jede der Kennungen von Ereignissen der Liste nicht in dem Endgerät gespeichert ist,
- einem Zugangsberechtigungen-Kriterium, das eine Liste von Kennungen von Zugangsberechtigungen umfasst und das erfüllt ist, falls jede der Kennungen von Zugangsberechtigungen der Liste in dem Endgerät gespeichert ist,
- einem Zugangsberechtigungen-Kriterium, das eine Liste von Kennungen von Zugangsberechtigungen umfasst und das erfüllt ist, falls jede der Kennungen von Zugangsberechtigungen der Liste nicht in dem Endgerät gespeichert ist,
- einem Betriebszeit-Kriterium, das einen Dauer-Parameter umfasst und das erfüllt ist, falls das Endgerät seit einer Dauer in Betrieb ist, die größer als diejenige ist, die durch seinen Dauer-Parameter ausgedrückt wird,
- einem Betriebszeit-Kriterium, das einen Dauer-Parameter umfasst und das erfüllt ist, falls das Endgerät seit einer Dauer in Betrieb ist, die kleiner als diejenige ist, die durch seinen Dauer-Parameter ausgedrückt wird,
- einem Betriebsperioden-Kriterium, das eine Liste von Zuordnungen von Zeitintervallen zu einem Kanal umfasst und das erfüllt ist, falls für jede der Zuordnungen das Endgerät während jedes dieser Zeitintervalle auf diesem Kanal in Betrieb war,
- einem Betriebsperioden-Kriterium, das eine Liste von Zuordnungen von Zeitintervallen zu einem Kanal umfasst und das erfüllt ist, falls für jede der Zuordnungen das Endgerät während jedes dieser Zeitintervalle nicht auf diesem Kanal in Betrieb war.

8. Verfahren nach einem der Ansprüche 5 bis 7, wobei in Schritt c) das Endgerät in Abhängigkeit von seiner Kennung die Dauer des Zeitintervalls zwischen dem Zeitpunkt, zu dem der Identifizierungsbefehl empfangen wird, und dem Zeitpunkt, zu dem das Endgerät die vorbestimmte Modifikation auslöst, berechnet (123) und anschließend nach Ablauf einer Zeit, die gleich der berechneten Dauer ist, die vorbestimmte Modifikation auslöst.

9. Verfahren nach Anspruch 8, wobei:
- in Schritt b) der erfasste Identifizierungsbefehl einen Verzögerungsparameter (821), einen Schrankenparameter (822) und einen Bitgruppenkennungsparameter (823) aufweist,
- in Schritt c) das Endgerät die Dauer in Abhängigkeit von derjenigen, die durch den Verzögerungsparameter ausgedrückt wird, und von einem Wert der Bitgruppe der Kennung des Endgerätes, der durch den Bitgruppenkennungsparameter angegeben wird, berechnet (123), und
- in Schritt c) das Endgerät die berechnete Dauer auf eine Dauer begrenzt (125), die in Abhängigkeit von dem Schrankenparameter bestimmt wird, falls die berechnete Dauer die in Abhängigkeit von diesem Schrankenparameter bestimmte Dauer überschreitet, und das Endgerät die berechnete Dauer unverändert lässt, falls die berechnete Dauer kürzer als die in Abhängigkeit von dem Schrankenparameter bestimmte Dauer ist.

10. Verfahren nach einem der Ansprüche 5 bis 9, wobei in Schritt c) das Endgerät eine Abspieldauer in Abhängigkeit von seiner Kennung berechnet (127) und anschließend eine vorbestimmte Modifikation wenigstens eines Teils der Informationsbits, die notwendig sind, um einen Ton abzuspielen oder ein vollständiges Bild anzuzeigen, der bzw. das in dem Multimediastrom enthalten ist, auslöst oder nicht, die derart wiederholt wird, dass die Abspieldauer der so modifizierten Töne oder vollständigen Bilder gleich der berechneten Abspieldauer ist.

11. Verfahren zur Bestimmung einer Kennung eines Endgerätes durch eine Vorrichtung zur Identifizierung von Endgeräten zur Durchführung eines Verfahrens gemäß Anspruch 1, wobei:
- in Schritt b) die Vorrichtung zur Identifizierung von Endgeräten einen Identifizierungsbefehl zu diesem Endgerät überträgt (116),
- in Schritt d) (130) die Vorrichtung zur Identifizierung von Endgeräten den modifizierten Multimediastrom erfasst, der von dem Endgerät übertragen wird,
**dadurch gekennzeichnet, dass** die Vorrichtung zur Identifizierung von Endgeräten in Schritt d) (130) eine Kennung des Endgerätes oder einer Gruppe von Endgeräten, zu der es gehört,
• aus dem übertragenen Befehl und
• aus dem Vorhandensein oder, alternativ dazu, dem Nichtvorhandensein, als Reaktion auf diesen übertragenen Befehl, der vorbestimmten Modifikation in dem erfassten Multimediastrom und
• unabhängig vom Inhalt der vorbestimmten Modifikation, die in dem erfassten Multimediastrom enthalten ist,
bestimmt.

12. Informationsaufzeichnungsmedium (18, 52), **dadurch gekennzeichnet, dass** es Anweisungen zur Ausführung eines Verfahrens gemäß einem der Ansprüche 5 bis 11, wenn diese Anweisungen von einem elektronischen Rechner ausgeführt werden, aufweist.

13. Endgerät (1) zur Durchführung eines Verfahrens zur Erzeugung eines modifizierten Multimediastroms gemäß einem der Ansprüche 5 bis 10, wobei das Endgerät geeignet ist:
- in Schritt a) einen zeitlichen Multimedia-Inhalt zu erfassen und anschließend zu decodieren, um einen Multimediastrom in unverschlüsselter Form zu erzeugen, der eine zeitliche Abfolge von Tönen oder Bildern aufweist, wobei dieser Multimediastrom geeignet ist, von einem an dieses Endgerät angeschlossenen Multimediagerät (2, 4) abgespielt zu werden,
- in Schritt b) einen Identifizierungsbefehl zu erfassen, der von der Vorrichtung (5) zur Identifizierung von Endgeräten übertragen wird,
**dadurch gekennzeichnet, dass** dieses Endgerät einen elektronischen Rechner (16) aufweist, der dafür programmiert ist, in Reaktion auf diesen Befehl einen Schritt c) der Auslösung oder, alternativ dazu, der Verhinderung einer vorbestimmten Modifikation wenigstens eines Teils der Informationsbits, die notwendig sind, um einen Ton abzuspielen oder ein vollständiges Bild anzuzeigen, der bzw. das in dem Multimediastrom enthalten ist, um einen modifizierten Multimediastrom zu erhalten, und der Übertragung dieses modifizierten Multimediastroms als des von dem Multimediagerät abzuspielenden Multimediastroms durchzuführen,
wobei die Wahl zwischen Auslösen und Verhindern der vorbestimmten Modifikation in Abhängigkeit von einer Kennung des Endgerätes oder einer Gruppe von Endgeräten, zu denen dieses Endgerät gehört, getroffen wird und
der Inhalt der vorbestimmten Modifikation unabhängig von der Kennung des Endgerätes oder der Gruppe von Endgeräten, zu der es gehört, ist.

14. Vorrichtung (5) zur Identifizierung von Endgeräten zur Durchführung eines Verfahrens zur Bestimmung einer Kennung eines Endgerätes gemäß Anspruch 11, wobei die Vorrichtung geeignet ist:
- in einem Schritt b) einen Identifizierungsbefehl zu diesem Endgerät zu übertragen,
- in einem Schritt d) den modifizierten Multimediastrom, der von dem Endgerät übertragen wird, zu erfassen,
**dadurch gekennzeichnet, dass** diese Vorrichtung zur Identifizierung von Endgeräten einen elektronischen Rechner (54) aufweist, der dafür programmiert ist, in Schritt d) eine Kennung des Endgerätes oder einer Gruppe von Endgeräten, zu der es gehört, zu bestimmen:
• aus dem übertragenen Befehl und
• aus dem Vorhandensein oder, alternativ dazu, dem Nichtvorhandensein, als Reaktion auf diesen übertragenen Befehl, der vorbestimmten Modifikation in dem erfassten Multimediastrom und
• unabhängig vom Inhalt der vorbestimmten Modifikation, die in dem erfassten Multimediastrom enthalten ist.

## Claims

1. Terminal identification method in a system for providing multimedia content, in which:
a) a terminal acquires (101, 103) then decodes (105, 107, 109) multimedia temporal content in order to generate a multimedia stream in unscrambled form comprising at least one temporal succession of time intervals clocked at a predefined frequency, the set of information bits necessary for displaying a single complete image or for playing a sound on a multimedia apparatus being transmitted during a single time interval, and each time interval corresponding to a single image or to a single sound, this multimedia stream being able to be played by a multimedia apparatus connected to this terminal,
b) a terminal identification device transmits (116, 144, 103) an identification command to this terminal,
**characterized in that**:
c) in response to this command, the terminal triggers (129) and alternately inhibits a predetermined modification of at least some of the information bits necessary for playing a sound or displaying a complete image contained in the multimedia stream in such a way as to obtain a modified multimedia stream, and transmits (109) this modified multimedia stream as a multimedia stream to be played by the multimedia apparatus, the choice between triggering and inhibiting the predetermined modification being carried out as a function of an identifier of the terminal or of a group of terminals to which this terminal belongs, and the tenor of said predetermined modification being independent of the identifier of the terminal or of the group of terminals to which it belongs,
d) the terminal identification device acquires the modified multimedia stream transmitted by the terminal and determines (5) the identifier of the terminal or of the group of terminals to which it belongs on the basis of the transmitted command and the presence or absence, in response, of the predetermined modification in the acquired multimedia stream, and independently of the tenor of said predetermined modification.

2. Method according to Claim 1, in which:
- in step b), the identification device constructs a precondition (81) and inserts it (114) into the identification command (8) to be transmitted, this precondition testing the presence or the value of at least one prerecorded parameter in a terminal, this precondition being constructed in such a way as to be verified only by some of the terminals to which the identification command is transmitted,
- in step c), the terminal first evaluates (121) the precondition, then triggers and alternately inhibits the predetermined modification according to the result of the evaluation of the precondition.

3. Method according to either one of the preceding claims, in which:
- in step a), the terminal acquires, descrambles then decodes the multimedia temporal content protected by a conditional access system, and
- in step b), the terminal identification device transmits the identification command to the terminal in an entitlement control or entitlement management message (7) provided and synchronized with the protected temporal content.

4. Method according to any one of the preceding claims, in which:
- in step a), a composer (14) receives the decompressed components of the multimedia stream then combines them to make up the multimedia stream and transmits the latter on its output, and
- in step c), in response to the identification command, the composer (14) of the terminal triggers or performs the predetermined modification of at least some of the information bits necessary for playing a sound or displaying a complete image contained in the multimedia stream in such a way as to obtain the modified multimedia stream.

5. Method for the generation by a terminal of a modified multimedia stream for implementing the method according to Claim 1, in which:
- in step a) the terminal acquires (101, 103) then decodes (105, 107, 109) multimedia temporal content in order to generate a multimedia stream in unscrambled form comprising at least one temporal succession of time intervals clocked at a predefined frequency, the set of information bits necessary for displaying a single complete image or for playing a sound on a multimedia apparatus being transmitted during a single time interval, and each time interval corresponding to a single image or to a single sound, this multimedia stream being able to be played by a multimedia apparatus connected to this terminal,
- in step b), the terminal acquires (101, 103) an identification command transmitted by the terminal identification device,
**characterized in that**, in response to this command, in step c), the terminal triggers (129) and alternately inhibits a predetermined modification of at least some of the information bits necessary for playing a sound or displaying a complete image contained in the multimedia stream in such a way as to obtain a modified multimedia stream, and transmits (109) this modified multimedia stream as a multimedia stream to be played by the multimedia apparatus,
the choice between triggering and inhibiting the predetermined modification being carried out as a function of an identifier of the terminal or of a group of terminals to which this terminal belongs, and the tenor of said predetermined modification being independent of the identifier of the terminal or of the group of terminals to which it belongs.

6. Method according to Claim 5, in which:
- in step b), the acquired identification command (8) comprises a precondition (81) this precondition testing the presence of the value of at least one prerecorded parameter in a terminal, this precondition being constructed in such a way as to be verified only by some of the terminals to which the identification command is transmitted,
- in step c), the terminal first evaluates (121) the precondition, then triggers the predetermined modification according to the result of the evaluation of the precondition.

7. Method according to Claim 6, in which the precondition is a combination (811) of criteria, each of a type chosen from a set consisting of the following types:
- an index criterion comprising a value parameter, true if the bit of the identifier of the terminal, having an index given by the value parameter, has a predetermined value,
- an identifier criterion comprising a value parameter and a mask parameter, true if the terminal identifier bits selected or masked by the mask parameter have the same values as those of the value parameter,
- an identifier criterion comprising a mask parameter and a total number parameter, true if the number of terminal identifier bits selected or masked by the mask parameter which have a predetermined value is equal to the total number parameter,
- an event criterion comprising a list of event identifiers, true if each of the event identifiers on the list is stored in the terminal, an event being a phenomenon identifiable by the terminal and which, when it occurs, triggers the recording by the terminal of an identifier of this event and, conversely, so long as this event does not occur, no identifier of this event is recorded by the terminal, the event identifier making it possible to distinguish this event from among the set of other events identifiable by the terminal,
- an event criterion comprising a list of event identifiers, true if each of the event identifiers on the list is not stored in the terminal,
- an entitlement criterion comprising a list of entitlement identifiers, true if each of the entitlement identifiers on the list is stored in the terminal,
- an entitlement criterion comprising a list of entitlement identifiers, true if each of the entitlement identifiers on the list is not stored in the terminal,
- an operating time criterion comprising a duration parameter, true if the terminal has been in operation for a duration greater than that expressed by its duration parameter,
- an operating time criterion comprising a duration parameter, true if the terminal has been in operation for a duration less than that expressed by its duration parameter,
- an operating period criterion comprising a list of associations of time intervals with a channel, true if, for each of the associations, the terminal has been in operation on this channel during each of these time intervals,
- an operating period criterion comprising a list of associations of time intervals with a channel, true if, for each of the associations, the terminal has not been in operation on this channel during each of these time intervals.

8. Method according to any one of Claims 5 to 7, in which, in step c), the terminal calculates (123), according to its identifier, the duration of the time interval between the time when the identification command is received and the time when the terminal triggers the predetermined modification, then triggers the predetermined modification after having allowed the expiry of a duration equal to the calculated duration.

9. Method according to Claim 8, in which:
- in step b), the acquired identification command comprises a delay parameter (821), a limit parameter (822) and a bit group identifier parameter (823),
- in step c), the terminal calculates (123) the duration according to that expressed by the delay parameter and according to a value of the group of bits of the identifier of the terminal identified by the bit group identifier parameter, and
- in step c), the terminal limits (125) the calculated duration to a duration determined according to the limit parameter if the calculated duration exceeds the duration determined according to this limit parameter, and the terminal leaves the calculated duration unchanged if the calculated duration is less than the duration determined according to the limit parameter.

10. Method according to any one of Claims 5 to 9, in which, in step c), the terminal triggers (127) a playing duration according to its identifier, then triggers or does not trigger a predetermined modification of at least some of the information bits necessary for playing a sound or displaying a complete image contained in the multimedia stream, repeated in such a way that the playing duration of the sounds or complete images thus modified is equal to the calculated playing duration.

11. Method for the determination of a terminal identifier by a terminal identification device, for the implementation of a method according to Claim 1, in which:
- in step b) the terminal identification device transmits (116) an identification command to this terminal,
- in step d) (130), the terminal identification device acquires the modified multimedia stream transmitted by the terminal,
**characterized in that** the terminal identification device, in step d) (130), determines an identifier of the terminal or of a group of terminals to which it belongs:
• on the basis of the transmitted command, and
• on the basis of the presence and alternately the absence, in response to this transmitted command, of the predetermined modification in the acquired multimedia stream, and
• independently of the tenor of said predetermined modification contained in the acquired multimedia steam.

12. Information-recording medium (18, 52), **characterized in that** it comprises instructions for carrying out a method according to any one of Claims 5 to 11 when these instructions are executed by an electronic processor.

13. Terminal (1) for implementing a method for generating a modified multimedia stream according to any one of Claims 5 to 10, in which the terminal is able:
- in a step a), to acquire then decode multimedia temporal content in order to generate a multimedia stream in unscrambled form comprising a temporal succession of sounds or images, this multimedia flow being able to be played by a multimedia apparatus (2, 4) connected to this terminal,
- in a step b), to acquire an identification command transmitted by the terminal identification device (5),
**characterized in that** this terminal comprises an electronic processor (16) programmed to implement, in response to this command, a step c) of triggering and alternately inhibiting a predetermined modification of at least some of the information bits necessary for playing a sound or displaying a complete image contained in the multimedia stream in such a way as to obtain a modified multimedia stream, and of transmitting this modified multimedia stream as a multimedia stream to be played by the multimedia apparatus,
the choice between triggering and inhibiting the predetermined modification being carried out as a function of an identifier of the terminal or of a group of terminals to which this terminal belongs, and
the tenor of said predetermined modification being independent of the identifier of the terminal or of the group of terminals to which it belongs.

14. Terminal identification device (5) for the implementation of a terminal identifier determination method according to Claim 11, in which the device is able:
- in a step b), to transmit an identification command to this terminal,
- in a step d), to acquire the modified multimedia stream transmitted by the terminal,
**characterized in that** the terminal identification device comprises an electronic processor (54) programmed to determine, in step d), an identifier of the terminal or of a group of terminals to which it belongs:
• on the basis of the transmitted command, and
• on the basis of the presence and alternately the absence, in response to this transmitted command, of the predetermined modification in the acquired multimedia stream, and
• independently of the tenor of said predetermined modification contained in the acquired multimedia stream.
